(19) Europäisches Patentamt
European Patent Office
Office européen des brevets

(11) **EP 4 089 587 A1**

(12) **EUROPEAN PATENT APPLICATION**
published in accordance with Art. 153(4) EPC

(43) Date of publication:
**16.11.2022 Bulletin 2022/46**

(21) Application number: **20919261.6**

(22) Date of filing: **25.09.2020**

(51) International Patent Classification (IPC):
**G06N 3/08** *(2006.01)* **G06N 3/04** *(2006.01)*
**G06N 3/10** *(2006.01)*

(86) International application number:
**PCT/CN2020/117760**

(87) International publication number:
**WO 2021/159714 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2020 CN 202010088948**

(71) Applicant: **Huawei Technologies Co., Ltd.**
**Shenzhen, Guangdong 518129 (CN)**

(72) Inventors:
• **HOU, Lu**
**Shenzhen, Guangdong 518129 (CN)**
• **SHANG, Lifeng**
**Shenzhen, Guangdong 518129 (CN)**
• **JIANG, Xin**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **DATA PROCESSING METHOD AND RELATED DEVICE**

(57) This application relates to the field of artificial intelligence, and discloses a data processing method, including: obtaining a first neural network model and an available resource state of a terminal device; and determining a second neural network model based on the available resource state. In this application, an appropriate model size may be determined based on the available resource state, and a part of the first neural network model is selected, based on the determined model size, as the second neural network model on which data processing is to be performed, thereby reducing a size of the model.

Obtain a first neural network model and an available resource state of a terminal device ⟋ 601

Determine a second neural network model based on the available resource state ⟋ 602

FIG. 6

**Description**

This application claims priority to Chinese Patent Application No. 202010088948.2, filed with the China National Intellectual Property Administration on February 12, 2020 and entitled "DATA PROCESSING METHOD AND RELATED DEVICE", which is incorporated herein by reference in its entirety.

**TECHNICAL FIELD**

This application relates to the field of artificial intelligence, and in particular, to a data processing method and a related device.

**BACKGROUND**

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and obtain an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions.

With continuous development of artificial intelligence technologies, a natural language human-machine interaction system that enables human-machine interaction to be performed by using a natural language becomes increasingly important. The system needs to recognize specific meanings of a human natural language, to enable the human-machine interaction to be performed by using the natural language. Usually, the system extracts key information from a natural language sentence to recognize a specific meaning of the sentence.

A transformer structure has a powerful semantic representation capability and can capture a dependency between pieces of long text. Since the transformer structure was proposed, a series of natural language processing tasks represented by translation have significantly surpassed previous models. A pre-trained language model based on the transformer structure has also achieved very good effect in fields such as a question-answering system and a voice assistant.

However, a transformer model has many parameters. When inference is performed on a cloud side that has requirements for a latency and precision or on a device side with limited storage, computing, and power consumption, resources allocated to the transformer model may be insufficient.

**SUMMARY**

According to a first aspect, this application provides a data processing method. The method includes: obtaining a first neural network model and an available resource state of a terminal device, where the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers; determining a second neural network model based on the available resource state, where the second neural network model is obtained based on the first neural network model, and the second neural network model meets at least one of the following conditions: the second neural network model includes a second transformer layer corresponding to the first transformer layer, and a quantity of attention heads included by the second transformer layer is less than M; or the second neural network model includes a second intermediate layer corresponding to the first intermediate layer, and a quantity of neurons included by the second intermediate layer is less than N.

Optionally, in an optional design of the first aspect, the method further includes: obtaining to-be-processed language information; and processing the to-be-processed language information based on the second neural network model.

Optionally, in an optional design of the first aspect, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or

the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

Optionally, in an optional design of the first aspect, each attention head included by the second transformer layer is one of the M attention heads included by the first transformer layer; or
each neuron included by the second intermediate layer is one of the M neurons included by the first intermediate layer.

Optionally, in an optional design of the first aspect, a ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, in an optional design of the first aspect, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head; or
the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

Optionally, in an optional design of the first aspect, the method further includes:
determining first width size information or second width size information of the second neural network model based on the available resource state, where the first width size information includes the quantity of attention heads included by the second transformer layer, and the second width size information includes the quantity of neurons included by the second intermediate layer.

Optionally, in an optional design of the first aspect, the determining size information or second width size information of the second neural network model based on the available resource state includes:
determining the first width size information or the second width size information of the second neural network model based on a preset association relationship and the available resource state, where the preset association relationship indicates a correspondence between the available resource state and the first width size information of the second neural network model or a correspondence between the available resource state and the second width size information of the second neural network model.

The preset association relationship is a preset function; and an input of the preset function is the available resource state, and an output of the preset function is the first width size information of the second neural network model; or an input of the preset function is the available resource state, and an output of the preset function is the second width size information of the second neural network model; or
the preset association relationship is a preset table; and the preset table includes a plurality of available resource states and first width size information that is of the second neural network model and that corresponds to each available resource state; or the preset table includes a plurality of available resource states and second width size information that is of the second neural network model and that corresponds to each available resource state.

Optionally, in an optional design of the first aspect, the available resource state includes at least one of the following:
power consumption of the terminal device, a computing capability of the terminal device, or an available storage size of the terminal device.

Optionally, in an optional design of the first aspect, each attention head included by the second transformer layer is one of the M attention heads included by the first transformer layer.

Optionally, in an optional design of the first aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the first aspect, the second neural network model is a part of the first neural network model.

Optionally, in an optional design of the first aspect, the first transformer layer further includes the first feed-forward layer, the second transformer layer further includes a second feed-forward layer, the first feed-forward layer includes the first intermediate layer (intermediate layer), the second feed-forward layer includes the second intermediate layer, the ratio of the quantity of neurons included by the second intermediate layer to the quantity of neurons included by the first intermediate layer is the first ratio, the ratio of the quantity of attention heads included by the second transformer layer to the quantity of attention heads included by the first transformer layer is the second ratio, and the first ratio is equal to the second ratio.

Optionally, in an optional design of the first aspect, a sum of absolute values of element values in a plurality of transformation matrices included by the first attention head is greater than a sum of absolute values of element values in a plurality of transformation matrices included by the second attention head.

Optionally, in an optional design of the first aspect, the M attention heads included by the first transformer layer are arranged in the following manner:
arranging the M attention heads based on capabilities of affecting the output result of the first neural network model by the M attention heads.

Optionally, in an optional design of the first aspect, the method further includes:
receiving the first preset association relationship sent by a cloud-side device.

Optionally, in an optional design of the first aspect, the method further includes:

sending performance requirement information of the terminal device to the cloud-side device; and
receiving the first neural network model that is determined based on the performance requirement information and that is sent by the cloud-side device.

Optionally, in an optional design of the first aspect, the performance requirement information includes at least one of the following:
a precision requirement, a latency requirement, or a model compression ratio requirement.

Optionally, in an optional design of the first aspect, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, in an optional design of the first aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the first aspect, the first neural network model further includes a fifth transformer layer and a sixth transformer layer. The first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the first aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the first aspect, the second neural network model is a part of the first neural network model.

Optionally, in an optional design of the first aspect, the M neurons included by the first intermediate layer are arranged in the following manner:
arranging the M neurons based on capabilities of affecting the output result of the first neural network model by the M neurons.

Optionally, in an optional design of the first aspect, the method further includes:
receiving the second preset association relationship sent by a cloud-side device.

Optionally, in an optional design of the first aspect, the method further includes:

sending performance requirement information of the terminal device to the cloud-side device; and
receiving the first neural network model that is determined based on the performance requirement information and that is sent by the cloud-side device.

Optionally, in an optional design of the first aspect, the performance requirement information includes at least one of the following:
a precision requirement, a latency requirement, or a model compression ratio requirement.

Optionally, in an optional design of the first aspect, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, in an optional design of the first aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the first aspect, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

According to a second aspect, this application provides a data processing method. The method includes: obtaining a first neural network model and an available resource state of a terminal device, where the first neural network model includes N transformer layers, and N is a positive integer; determining a second neural network model based on the available resource state, where the second neural network model is obtained based on the first neural network model, and a quantity of transformer layers included by the second neural network model is less than N; obtaining to-be-processed language information; and processing the to-be-processed language information based on the second neural network model.

Optionally, in an optional design of the second aspect, the first neural network model is obtained by performing knowledge distillation training on an initial neural network model based on at least one depth size, where each of the at least one depth size indicates a quantity of transformer layers, and a quantity of second transformer layers is one of the at least one depth size.

Optionally, in an optional design of the second aspect, the N transformer layers include a first transformer layer, the second neural network model includes a second transformer layer corresponding to the first transformer layer, and the first transformer layer and the second transformer layer meet a preset condition.

The first transformer layer includes a first multi-head attention MHA layer, a first skip connection layer, a first feed-forward layer, and a first normalization layer, and the first feed-forward layer includes a first intermediate layer (intermediate layer). The second transformer layer includes a second MHA layer, a second skip connection layer, a second feed-forward layer, and a second normalization layer, and the second feed-forward layer includes a second intermediate layer. The preset condition includes at least one of the following:

the first skip connection layer is the same as the second skip connection layer;
the first normalization layer is the same as the second normalization layer;
each of a plurality of attention heads included by the second MHA layer is one of the first MHA layer included by the first transformer layer; or
each of a plurality of neurons included by the second intermediate layer is one of a plurality of neurons included by the first intermediate layer.

Optionally, in an optional design of the second aspect, the method further includes:
determining depth size information of the second neural network model based on the available resource state, where the depth size information includes the quantity of transformer layers included by the second neural network model.

Optionally, in an optional design of the second aspect, the available resource state includes at least one of the following:
power consumption of the terminal device, a computing capability of the terminal device, or an available storage size of the terminal device.

Optionally, in an optional design of the second aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the second aspect, the first neural network model further includes a fifth transformer layer and a sixth transformer layer, where the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer.

The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the second aspect, the output vector of the first transformer layer is used as an input vector of a next transformer layer, and the output vector of the second transformer layer is used as an output representation of the first neural network.

Optionally, in an optional design of the second aspect, the determining depth size information of the second neural network model based on the available resource state includes:

determining the depth size information of the second neural network model based on a third preset association relationship and the available resource state, where the third preset association relationship indicates a correspondence between the available resource state and the depth size information of the second neural network model.

Optionally, in an optional design of the second aspect, the third preset association relationship is a preset function; and an input of the preset function is the available resource state, and an output of the preset function is the depth size information of the second neural network model; or

the third preset association relationship is a preset table; and the preset table includes a plurality of available resource states and depth size information that is of the second neural network model and that corresponds to each available resource state.

Optionally, in an optional design of the second aspect, the available resource state includes at least one of the following:

the power consumption of the terminal device, the computing capability of the terminal device, or the available storage size of the terminal device.

Optionally, in an optional design of the second aspect, the method further includes:

receiving the third preset association relationship sent by a cloud-side device.

Optionally, in an optional design of the second aspect, the method further includes:

sending performance requirement information of the terminal device to the cloud-side device; and
receiving the first neural network model that is determined based on the performance requirement information and that is sent by the cloud-side device.

Optionally, in an optional design of the second aspect, the performance information includes at least one of the following:

a precision requirement, a latency requirement, or a model compression ratio requirement.

According to a third aspect, this application provides a data processing method, including:

receiving performance requirement information sent by a terminal device; obtaining a first neural network model, where the first neural network model includes a first transformer layer, the first neural network model includes a first transformer layer, the first transformer layer includes M attention heads and a first feed-forward layer, the first feed-forward layer includes a first intermediate layer intermediate layer, the first intermediate layer includes N neurons, and M and N are positive integers; determining a second neural network model based on the performance requirement information, where the second neural network model is obtained based on the first neural network model, and the second neural network model meets at least one of the following conditions:

the second neural network model includes a second transformer layer corresponding to the first transformer layer, and a quantity of attention heads included by the second transformer layer is less than M; or
the second neural network model includes a second intermediate layer corresponding to the first intermediate layer, and a quantity of neurons included by the second intermediate layer is less than N; and
sending the second neural network model to the terminal device.

Optionally, in an optional design of the third aspect, the performance requirement information includes at least one of the following:

a precision requirement, a latency requirement, or a model compression ratio requirement.

Optionally, in an optional design of the third aspect, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

Optionally, in an optional design of the third aspect, each attention head included by the second transformer layer is one of the M attention heads included by the first transformer layer, or each neuron included by the second intermediate layer is one of the M neurons included by the first intermediate layer.

Optionally, in an optional design of the third aspect, the method further includes:
sending a preset association relationship to the terminal device, where the preset association relationship indicates a correspondence between an available resource state and a third width size of a third neural network model or a correspondence between an available resource state and a fourth width size of the third neural network model, the third neural network model is obtained based on the second neural network model, the third width size indicates a quantity of attention heads included by a transformer layer, and the fourth width size indicates a quantity of neurons included by an intermediate layer.

The preset association relationship is a preset function; and an input of the preset function is the available resource state, and an output of the preset function is the third width size of the third neural network model; or an input of the preset function is the available resource state, and an output of the preset function is the fourth width size of the third neural network model; or
the preset association relationship is a preset table; and the preset table includes a plurality of available resource states and a third width size that is of the third neural network model and that corresponds to each available resource state; or the preset table includes a plurality of available resource states and a fourth width size that is of the third neural network model and that corresponds to each available resource state.

Optionally, in an optional design of the third aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the third aspect, the second neural network model is a part of the first neural network model.

Optionally, in an optional design of the third aspect, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, in an optional design of the third aspect, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head.

Optionally, in an optional design of the third aspect, a sum of absolute values of element values in a plurality of transformation matrices included by the first attention head is greater than a sum of absolute values of element values in a plurality of transformation matrices included by the second attention head.

Optionally, in an optional design of the third aspect, the M attention heads included by the first transformer layer are arranged in the following manner:
arranging the M attention heads based on capabilities of affecting the output result of the first neural network model by the M attention heads.

Optionally, in an optional design of the third aspect, a capability of affecting the output result of the first neural network model by each attention head included by the second transformer layer is greater than a capability of affecting the output result of the first neural network model by the second attention head.

Optionally, in an optional design of the third aspect, the method further includes:
determining first width size information of the second neural network model based on the performance requirement information, where the first width size information includes the quantity of attention heads included by the second transformer layer.

Optionally, in an optional design of the third aspect, the determining size information of the second neural network model based on the performance requirement information includes:
determining the first width size information of the second neural network model based on a first preset association relationship and the performance requirement information, where the first preset association relationship indicates a correspondence between the performance requirement information and the first width size information of the second neural network model.

The first preset association relationship is a preset function, an input of the preset function is the performance requirement information, and an output of the preset function is the first width size information of the second neural network model; or

the first preset association relationship is a preset table, and the preset table includes a plurality of pieces of performance requirement information and first width size information that is of the second neural network model and that corresponds to each piece of performance requirement information.

Optionally, in an optional design of the third aspect, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, in an optional design of the third aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the third aspect, the first neural network model further includes a fifth transformer layer and a sixth transformer layer. The first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the third aspect, each neuron included by the second intermediate layer is one of the M neurons included by the first intermediate layer.

Optionally, in an optional design of the third aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the third aspect, the first transformer layer further includes a first multi-head attention MHA layer, and the second transformer layer further includes a second MHA layer. A ratio of a quantity of attention heads included by the second MHA layer to a quantity of attention heads included by the first MHA layer is a first ratio, a ratio of the quantity of neurons included by the second intermediate layer to a quantity of neurons included by the first intermediate layer is a second ratio, and the first ratio is equal to the second ratio.

Optionally, in an optional design of the third aspect, the second neural network model is a part of the first neural network model.

Optionally, in an optional design of the third aspect, the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

Optionally, in an optional design of the third aspect, the M neurons included by the first intermediate layer are arranged in the following manner:

arranging the M neurons based on capabilities of affecting the output result of the first neural network model by the M neurons.

Optionally, in an optional design of the third aspect, a capability of affecting the output result of the first neural network model by each neuron included by the second intermediate layer is greater than the capability of affecting the output result of the first neural network model by the second neuron.

Optionally, in an optional design of the third aspect, the method further includes:

determining second width size information of the second neural network model based on the performance requirement information, where the second width size information includes the quantity of neurons included by the second intermediate layer.

Optionally, in an optional design of the third aspect, the determining second width size information of the second neural network model based on the performance requirement information includes:

determining the second width size information of the second neural network model based on a second preset association relationship and the performance requirement information, where the second preset association relationship indicates a correspondence between the performance requirement information and the second width size information of the second neural network model.

The first preset association relationship is a preset function, an input of the preset function is the performance requirement information, and an output of the preset function is the second width size information of the second neural network model; or

the first preset association relationship is a preset table, and the preset table includes a plurality of pieces of performance requirement information and second width size information that is of the second neural network model and that corresponds to each piece of performance requirement information.

Optionally, in an optional design of the third aspect, the performance requirement information includes at least one of the following:

the precision requirement, the latency requirement, or the model compression ratio requirement.

Optionally, in an optional design of the third aspect, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, in an optional design of the third aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the third aspect, the first neural network model further includes a fifth transformer layer and a sixth transformer layer. The first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

According to a fourth aspect, this application provides a data processing device. The device includes:

an obtaining module, configured to obtain a first neural network model and an available resource state of a terminal device, where the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers;
a determining module, configured to determine a second neural network model based on the available resource state, where the second neural network model is obtained based on the first neural network model, and the second neural network model meets at least one of the following conditions:

the second neural network model includes a second transformer layer corresponding to the first transformer layer, and a quantity of attention heads included by the second transformer layer is less than M; or
the second neural network model includes a second intermediate layer corresponding to the first intermediate layer, and a quantity of neurons included by the second intermediate layer is less than N, where
the obtaining module is further configured to obtain to-be-processed language information; and
a processing module, configured to process the to-be-processed language information based on the second neural network model.

Optionally, in an optional design of the fourth aspect, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or

the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

Optionally, in an optional design of the fourth aspect, each attention head included by the second transformer layer is one of the M attention heads included by the first transformer layer; or

each neuron included by the second intermediate layer is one of the M neurons included by the first intermediate layer.

Optionally, in an optional design of the fourth aspect, a ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, in an optional design of the fourth aspect, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head; or

the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

Optionally, in an optional design of the fourth aspect, the determining module is further configured to:

determine first width size information or second width size information of the second neural network model based on the available resource state, where the first width size information includes the quantity of attention heads included by the second transformer layer, and the second width size information includes the quantity of neurons included by the second intermediate layer.

Optionally, in an optional design of the fourth aspect, the determining module is specifically configured to:

determine the first width size information or the second width size information of the second neural network model based on a preset association relationship and the available resource state, where the preset association relationship indicates a correspondence between the available resource state and the first width size information of the second neural network model or a correspondence between the available resource state and the second width size information of the second neural network model.

The preset association relationship is a preset function; and an input of the preset function is the available resource state, and an output of the preset function is the first width size information of the second neural network model; or an input of the preset function is the available resource state, and an output of the preset function is the second width size information of the second neural network model; or

the preset association relationship is a preset table; and the preset table includes a plurality of available resource states and first width size information that is of the second neural network model and that corresponds to each available resource state; or the preset table includes a plurality of available resource states and second width size information that is of the second neural network model and that corresponds to each available resource state.

Optionally, in an optional design of the fourth aspect, the available resource state includes at least one of the following:

power consumption of the terminal device, a computing capability of the terminal device, or an available storage size of the terminal device.

Optionally, in an optional design of the fourth aspect, each attention head included by the second transformer layer is one of the M attention heads included by the first transformer layer.

Optionally, in an optional design of the fourth aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the fourth aspect, the second neural network model is a part of the first neural network model.

Optionally, in an optional design of the fourth aspect, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, in an optional design of the fourth aspect, a sum of absolute values of element values in a plurality of transformation matrices included by the first attention head is greater than a sum of absolute values of element values in a plurality of transformation matrices included by the second attention head.

Optionally, in an optional design of the fourth aspect, the M attention heads included by the first transformer layer are arranged in the following manner:

arranging the M attention heads based on capabilities of affecting the output result of the first neural network model by the M attention heads.

Optionally, in an optional design of the fourth aspect, the device further includes a receiving module, configured to:

receive the first preset association relationship sent by a cloud-side device.

Optionally, in an optional design of the fourth aspect, the device further includes a sending module, configured to: send performance requirement information of the terminal device to the cloud-side device.

The receiving module is further configured to:
receive the first neural network model that is determined based on the performance requirement information and that is sent by the cloud-side device.

Optionally, in an optional design of the fourth aspect, the performance requirement information includes at least one of the following:
a precision requirement, a latency requirement, or a model compression ratio requirement.

Optionally, in an optional design of the fourth aspect, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, in an optional design of the fourth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the fourth aspect, the first neural network model further includes a fifth transformer layer and a sixth transformer layer, where the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the fourth aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the fourth aspect, the second neural network model is a part of the first neural network model.

Optionally, in an optional design of the fourth aspect, the M neurons included by the first intermediate layer are arranged in the following manner:
arranging the M neurons based on capabilities of affecting the output result of the first neural network model by the M neurons.

Optionally, in an optional design of the fourth aspect, the receiving module is further configured to:
receive the second preset association relationship sent by a cloud-side device.

Optionally, in an optional design of the fourth aspect, the sending module is further configured to:
send performance requirement information of the terminal device to the cloud-side device.

The receiving module is further configured to:
receive the first neural network model that is determined based on the performance requirement information and that is sent by the cloud-side device.

Optionally, in an optional design of the fourth aspect, the performance requirement information includes at least one of the following:
a precision requirement, a latency requirement, or a model compression ratio requirement.

Optionally, in an optional design of the fourth aspect, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, in an optional design of the fourth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the fourth aspect, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

According to a fifth aspect, this application provides a data processing device. The device includes:

an obtaining module, configured to obtain a first neural network model and an available resource state of a terminal device, where the first neural network model includes N transformer layers, and N is a positive integer;

a determining module, configured to determine a second neural network model based on the available resource state, where the second neural network model is obtained based on the first neural network model, and a quantity of transformer layers included by the second neural network model is less than N, where

the obtaining module is further configured to obtain to-be-processed language information; and

a processing module, configured to process the to-be-processed language information based on the second neural network model.

Optionally, in an optional design of the fifth aspect, the first neural network model is obtained by performing knowledge distillation training on an initial neural network model based on at least one depth size, where each of the at least one depth size indicates a quantity of transformer layers, and the quantity of second transformer layers is one of the at least one depth size.

Optionally, in an optional design of the fifth aspect, the N transformer layers include a first transformer layer, the second neural network model includes a second transformer layer corresponding to the first transformer layer, and the first transformer layer and the second transformer layer meet a preset condition.

The first transformer layer includes a first multi-head attention MHA layer, a first skip connection layer, a first feed-forward layer, and a first normalization layer, and the first feed-forward layer includes a first intermediate layer (intermediate layer). The second transformer layer includes a second MHA layer, a second skip connection layer, a second feed-forward layer, and a second normalization layer, and the second feed-forward layer includes a second intermediate layer. The preset condition includes at least one of the following:

the first skip connection layer is the same as the second skip connection layer;

the first normalization layer is the same as the second normalization layer;

each of a plurality of attention heads included by the second MHA layer is one of the first MHA layer included by the first transformer layer; or

each of a plurality of neurons included by the second intermediate layer is one of a plurality of neurons included by the first intermediate layer.

Optionally, in an optional design of the fifth aspect, the determining module is further configured to: determine depth size information of the second neural network model based on the available resource state, where the depth size information includes the quantity of transformer layers included by the second neural network model.

Optionally, in an optional design of the fifth aspect, the available resource state includes at least one of the following:

power consumption of the terminal device, a computing capability of the terminal device, or an available storage size of the terminal device.

Optionally, in an optional design of the fifth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the fifth aspect, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the fifth aspect, the output vector of the first transformer layer is used as an input vector of a next transformer layer, and the output vector of the second transformer layer is used as an output representation of the first neural network.

Optionally, in an optional design of the fifth aspect, the determining module is specifically configured to: determine the depth size information of the second neural network model based on a third preset association relationship and the available resource state, where the third preset association relationship indicates a correspondence between the available resource state and the depth size information of the second neural network model.

Optionally, in an optional design of the fifth aspect, the third preset association relationship is a preset function, an input of the preset function is the available resource state, and an output of the preset function is the depth size information of the second neural network model; or

the third preset association relationship is a preset table, and the preset table includes a plurality of available resource states and depth size information that is of the second neural network model and that corresponds to each available resource state.

Optionally, in an optional design of the fifth aspect, the available resource state includes at least one of the following:

the power consumption of the terminal device, the computing capability of the terminal device, or the available storage size of the terminal device.

Optionally, in an optional design of the fifth aspect, the device further includes a receiving module, configured to: receive the third preset association relationship sent by a cloud-side device.

Optionally, in an optional design of the fifth aspect, the device further includes a sending module, configured to: send performance requirement information of the terminal device to the cloud-side device.

The receiving module is further configured to receive the first neural network model that is determined based on the performance requirement information and that is sent by the cloud-side device.

Optionally, in an optional design of the fifth aspect, the performance information includes at least one of the following:

a precision requirement, a latency requirement, or a model compression ratio requirement.

According to a sixth aspect, this application provides a data processing device. The device includes:

a receiving module, configured to receive performance requirement information sent by a terminal device;

an obtaining module, configured to obtain a first neural network model, where the first neural network model includes a first transformer layer, the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers;

a determining module, configured to determine a second neural network model based on the performance requirement information, where the second neural network model is obtained based on the first neural network model, and the second neural network model meets at least one of the following conditions:

the second neural network model includes a second transformer layer corresponding to the first transformer layer, and a quantity of attention heads included by the second transformer layer is less than M; or

the second neural network model includes a second intermediate layer corresponding to the first intermediate layer, and a quantity of neurons included by the second intermediate layer is less than N; and

a sending module, configured to send the second neural network model to the terminal device.

Optionally, in an optional design of the sixth aspect, the performance requirement information includes at least one of the following:

a precision requirement, a latency requirement, or a model compression ratio requirement.

Optionally, in an optional design of the sixth aspect, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

Optionally, in an optional design of the sixth aspect, each attention head included by the second transformer layer is one of the M attention heads included by the first transformer layer; or each neuron included by the second intermediate layer is one of the M neurons included by the first intermediate layer.

Optionally, in an optional design of the sixth aspect, the sending module is further configured to:

send a preset association relationship to the terminal device, where the preset association relationship indicates a correspondence between an available resource state and a third width size of a third neural network model or a correspondence between an available resource state and a fourth width size of the third neural network model, the third neural network model is obtained based on the second neural network model, the third width size indicates a quantity of attention heads included by a transformer layer, and the fourth width size indicates a quantity of neurons included by an intermediate layer.

The preset association relationship is a preset function; and an input of the preset function is the available resource state, and an output of the preset function is the third width size of the third neural network model; or an input of the preset function is the available resource state, and an output of the preset function is the fourth width size of the third neural network model; or

the preset association relationship is a preset table; and the preset table includes a plurality of available resource states and a third width size that is of the third neural network model and that corresponds to each available resource state; or the preset table includes a plurality of available resource states and a fourth width size that is of the third neural network model and that corresponds to each available resource state.

Optionally, in an optional design of the sixth aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the sixth aspect, the second neural network model is a part of the first neural network model.

Optionally, in an optional design of the sixth aspect, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, in an optional design of the sixth aspect, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head.

Optionally, in an optional design of the sixth aspect, a sum of absolute values of element values in a plurality of transformation matrices included by the first attention head is greater than a sum of absolute values of element values in a plurality of transformation matrices included by the second attention head.

Optionally, in an optional design of the sixth aspect, the M attention heads included by the first transformer layer are arranged in the following manner:

arranging the M attention heads based on capabilities of affecting the output result of the first neural network model by the M attention heads.

Optionally, in an optional design of the sixth aspect, a capability of affecting the output result of the first neural network model by each attention head included by the second transformer layer is greater than the capability of affecting the output result of the first neural network model by the second attention head.

Optionally, in an optional design of the sixth aspect, the determining module is further configured to:

determine first width size information of the second neural network model based on the performance requirement information, where the first width size information includes the quantity of attention heads included by the second transformer layer.

Optionally, in an optional design of the sixth aspect, the determining module is specifically configured to: determine the first width size information of the second neural network model based on a first preset association relationship and the performance requirement information, where the first preset association relationship indicates a correspondence between the performance requirement information and the first width size information of the second neural network model.

The first preset association relationship is a preset function, an input of the preset function is the performance requirement information, and an output of the preset function is the first width size information of the second neural network model; or

the first preset association relationship is a preset table, and the preset table includes a plurality of pieces of performance requirement information and first width size information that is of the second neural network model and that corresponds to each piece of performance requirement information.

Optionally, in an optional design of the sixth aspect, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, in an optional design of the sixth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the sixth aspect, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the sixth aspect, each neuron included by the second intermediate layer is one of the M neurons included by the first intermediate layer.

Optionally, in an optional design of the sixth aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, in an optional design of the sixth aspect, the first transformer layer further includes a first multi-head attention MHA layer, and the second transformer layer further includes a second MHA layer. A ratio of a quantity of attention heads included by the second MHA layer to a quantity of attention heads included by the first MHA layer is a first ratio, a ratio of the quantity of neurons included by the second intermediate layer to a quantity of neurons included by the first intermediate layer is a second ratio, and the first ratio is equal to the second ratio.

Optionally, in an optional design of the sixth aspect, the second neural network model is a part of the first neural network model.

Optionally, in an optional design of the sixth aspect, the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

Optionally, in an optional design of the sixth aspect, the M neurons included by the first intermediate layer are arranged in the following manner:

arranging the M neurons based on capabilities of affecting the output result of the first neural network model by the M neurons.

Optionally, in an optional design of the sixth aspect, a capability of affecting the output result of the first neural network model by each neuron included by the second intermediate layer is greater than the capability of affecting the output result of the first neural network model by the second neuron.

Optionally, in an optional design of the sixth aspect, the determining module is further configured to:

determine second width size information of the second neural network model based on the performance requirement information, where the second width size information includes the quantity of neurons included by the second intermediate layer.

Optionally, in an optional design of the sixth aspect, the determining module is specifically configured to:

determine the second width size information of the second neural network model based on a second preset association relationship and the performance requirement information, where the second preset association relationship indicates a correspondence between the performance requirement information and the second width size information of the second neural network model.

The first preset association relationship is a preset function, an input of the preset function is the performance requirement information, and an output of the preset function is the second width size information of the second neural network model; or

the first preset association relationship is a preset table, and the preset table includes a plurality of pieces of performance requirement information and second width size information that is of the second neural network model and that corresponds to each piece of performance requirement information.

Optionally, in an optional design of the sixth aspect, the performance requirement information includes at least one of the following:

the precision requirement, the latency requirement, or the model compression ratio requirement.

Optionally, in an optional design of the sixth aspect, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, in an optional design of the sixth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the sixth aspect, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

According to a seventh aspect, this application provides a data processing method. The method includes:

obtaining a first neural network model, where the first neural network model includes a plurality of first transformer layers, each of the plurality of first transformer layers includes a plurality of attention heads and a first feed-forward layer, the first feed-forward layer includes a first intermediate layer (intermediate layer), and the first intermediate layer includes a plurality of neurons;

determining a first neural network submodel based on the first neural network model, where the first neural network submodel is a part of the first neural network model, the first neural network submodel includes a second transformer layer corresponding to each first transformer layer, each second transformer layer includes a second intermediate layer, a quantity of attention heads included by each second transformer layer is less than a quantity of attention heads included by a corresponding first transformer layer, and a quantity of neurons included by each second intermediate layer is less than a quantity of neurons included by a corresponding first intermediate layer; and

performing iterative training on the first neural network submodel by using the first neural network model as a teacher model and based on knowledge distillation, to update a parameter value of the first neural network submodel, so as to obtain a second neural network model, where an updated first neural network submodel is a part of the second neural network model.

Optionally, in an optional design of the seventh aspect, a ratio of the quantity of neurons included by each second intermediate layer to the quantity of neurons included by the corresponding first intermediate layer is a first ratio, a ratio of the quantity of attention heads included by each second transformer layer to the quantity of attention heads included by the corresponding first transformer layer is a second ratio, and the first ratio is equal to the second ratio.

Optionally, in an optional design of the seventh aspect, the method further includes: performing network reconstruction on each first transformer layer based on a capability of affecting an output result of the first neural network model by each attention head included by each first transformer layer.

Optionally, in an optional design of the seventh aspect, the method further includes: performing network reconstruction on each first intermediate layer based on a capability of affecting an output result of the first neural network model by each neuron included by each first intermediate layer.

Optionally, in an optional design of the seventh aspect, a first target transformer layer includes a first attention head, and the first target transformer layer is one of a plurality of second transformer layers included by the first neural network submodel. A first transformer layer corresponding to the first target transformer layer includes the first attention head and a second attention head, and the first target transformer layer does not include the second attention head. A capability of affecting the output result of the first neural network model by the first attention head is greater than a capability of affecting the output result of the first neural network model by the second attention head.

Optionally, in an optional design of the seventh aspect, a sum of absolute values of element values in a plurality of transformation matrices included by the first attention head is greater than a sum of absolute values of element values in a plurality of transformation matrices included by the second attention head.

Optionally, in an optional design of the seventh aspect, a second target intermediate layer includes a first neuron, and the second target intermediate layer is one of a plurality of second intermediate layers included by the first neural network submodel. A first intermediate layer corresponding to the second target intermediate layer includes the first neuron and a second neuron, and the second target intermediate layer does not include the second neuron. A capability of affecting the output result of the first neural network model by the first neuron is greater than a capability of affecting the output result of the first neural network model by the second neuron.

Optionally, in an optional design of the seventh aspect, the performing iterative training on the first neural network submodel by using the first neural network model as a teacher model and based on knowledge distillation, to update a parameter of the first neural network submodel, so as to obtain a second neural network model includes:

processing language information based on the first neural network model to obtain a first output label of the first neural network model and a first output vector of each first transformer layer, where the language information corresponds to a target label;

performing feedback processing on the first neural network model by using a first target function, to obtain a first gradient, where the first target function is related to a distance between the first output label and the target label;

processing the language information based on the first neural network submodel to obtain a second output label and a second output vector of each of the plurality of second transformer layers, where each second output vector corresponds to one first output vector;

performing feedback processing on the first neural network submodel by using a second target function, to obtain a second gradient, where the second target function is related to a distance between the second output label and the target label, a distance between the second output label and the first output label, and a distance between each first output vector and a corresponding second output vector; and

updating the parameter of the first neural network submodel based on a target gradient, to obtain the second neural network model, where the target gradient is related to the first gradient and the second gradient.

Optionally, in an optional design of the seventh aspect, the method further includes:

determining a second neural network submodel based on the second neural network model, where the second neural network submodel is a part of the second neural network model, and a quantity of transformer layers included by the second neural network submodel is less than M;

determining a third neural network submodel based on the second neural network model, where the third neural network submodel is a part of the second neural network model, a quantity of transformer layers included by the third neural network submodel is the same as a quantity of transformer layers included by the second neural network model, a quantity of attention heads included by each of a plurality of transformer layers included by the third neural network submodel is the same as a quantity of attention heads included by a corresponding transformer layer in the second neural network submodel, and a quantity of neurons included by each of a plurality of intermediate layers included by the third neural network submodel is the same as a quantity of neurons included by a corresponding intermediate layer in the second neural network submodel; and

performing iterative training on the second neural network submodel by using the third neural network submodel as a teacher model and based on knowledge distillation, to update a parameter value of the second neural network submodel, so as to obtain a third neural network model, where an updated second neural network submodel is a part of the third neural network model.

According to an eighth aspect, this application provides a data processing method. The method includes:

receiving performance requirement information sent by a terminal device;

obtaining a first neural network model, where the first neural network model includes N transformer layers, and N is a positive integer;

determining a second neural network model based on the performance requirement information, where a quantity of transformer layers included by the second neural network model is less than N, the first neural network model is obtained by performing knowledge distillation training on an initial neural network model based on at least one depth size, where each of the at least one depth size indicates a quantity of transformer layers, and a quantity of second transformer layers is one of the at least one depth size; and

sending the second neural network model to the terminal device.

Optionally, in an optional design of the eighth aspect, the N transformer layers include a first transformer layer, the second neural network model includes a second transformer layer corresponding to the first transformer layer, and the first transformer layer and the second transformer layer meet a preset condition.

The first transformer layer includes a first multi-head attention MHA layer, a first skip connection layer, a first feed-forward layer, and a first normalization layer, and the first feed-forward layer includes a first intermediate layer (intermediate layer). The second transformer layer includes a second MHA layer, a second skip connection layer, a second feed-forward layer, and a second normalization layer, and the second feed-forward layer includes a second intermediate layer. The preset condition includes at least one of the following:

the first skip connection layer is the same as the second skip connection layer;
the first normalization layer is the same as the second normalization layer;
each of a plurality of attention heads included by the second MHA layer is one of the first MHA layer included by the first transformer layer; or
each of a plurality of neurons included by the second intermediate layer is one of a plurality of neurons included by the first intermediate layer.

Optionally, in an optional design of the eighth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the eighth aspect, the first neural network model further includes a fifth transformer layer and a sixth transformer layer. The first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, in an optional design of the eighth aspect, the output vector of the first transformer layer is used as an input vector of a next transformer layer, and the output vector of the second transformer layer is used as an output representation of the first neural network.

Optionally, in an optional design of the eighth aspect, the method further includes:
determining depth size information of the second neural network model based on the performance requirement information, where the depth size information includes the quantity of transformer layers included by the second neural network model.

Optionally, in an optional design of the eighth aspect, the determining depth size information of the second neural network model based on the performance requirement information includes:
determining the depth size information of the second neural network model based on a third preset association relationship and the performance requirement information, where the third preset association relationship indicates a correspondence between the performance requirement information and the depth size information of the second neural network model.

Optionally, in an optional design of the eighth aspect, the third preset association relationship is a preset function, an input of the preset function is the performance requirement information, and an output of the preset function is the depth size information of the second neural network model; or
the third preset association relationship is a preset table, and the preset table includes a plurality of pieces of performance requirement information and depth size information that is of the second neural network model and that corresponds to each piece of performance requirement information.

According to a ninth aspect, an embodiment of this application provides a data processing device, including:

an obtaining module, configured to obtain a first neural network model, where the first neural network model includes a plurality of first transformer layers, each of the plurality of first transformer layers includes a plurality of attention heads and a first feed-forward layer, the first feed-forward layer includes a first intermediate layer (intermediate layer), and the first intermediate layer includes a plurality of neurons;
a determining module, configured to determine a first neural network submodel based on the first neural network model, where the first neural network submodel is a part of the first neural network model, the first neural network submodel includes a second transformer layer corresponding to each first transformer layer, each second transformer layer includes a second intermediate layer, a quantity of attention heads included by each second transformer layer is less than a quantity of attention heads included by a corresponding first transformer layer, and a quantity of neurons included by each second intermediate layer is less than a quantity of neurons included by a corresponding first intermediate layer; and
a training module, configured to perform iterative training on the first neural network submodel by using the first neural network model as a teacher model and based on knowledge distillation, to update a parameter value of the first neural network submodel, so as to obtain a second neural network model, where an updated first neural network submodel is a part of the second neural network model.

Optionally, in an optional design of the ninth aspect, a ratio of the quantity of neurons included by each second intermediate layer to the quantity of neurons included by the corresponding first intermediate layer is a first ratio, a ratio of the quantity of attention heads included by each second transformer layer to the quantity of attention heads included by the corresponding first transformer layer is a second ratio, and the first ratio is equal to the second ratio.

Optionally, in an optional design of the ninth aspect, the device further includes: performing network reconstruction on each first transformer layer based on a capability of affecting an output result of the first neural network model by each attention head included by each first transformer layer.

Optionally, in an optional design of the ninth aspect, the device further includes: performing network reconstruction on each first intermediate layer based on a capability of affecting an output result of the first neural network model by each neuron included by each first intermediate layer.

Optionally, in an optional design of the ninth aspect, a first target transformer layer includes a first attention head, and the first target transformer layer is one of a plurality of second transformer layers included by the first neural network submodel. A first transformer layer corresponding to the first target transformer layer includes the first attention head and a second attention head, and the first target transformer layer does not include the second attention head. A capability of affecting the output result of the first neural network model by the first attention head is greater than a capability of affecting the output result of the first neural network model by the second attention head.

Optionally, in an optional design of the ninth aspect, a sum of absolute values of element values in a plurality of transformation matrices included by the first attention head is greater than a sum of absolute values of element values in a plurality of transformation matrices included by the second attention head.

Optionally, in an optional design of the ninth aspect, a second target intermediate layer includes a first neuron, and the second target intermediate layer is one of a plurality of second intermediate layers included by the first neural network submodel. A first intermediate layer corresponding to the second target intermediate layer includes the first neuron and a second neuron, and the second target intermediate layer does not include the second neuron. A capability of affecting the output result of the first neural network model by the first neuron is greater than a capability of affecting the output result of the first neural network model by the second neuron.

Optionally, in an optional design of the ninth aspect, the training module is specifically configured to:

process language information based on the first neural network model to obtain a first output label of the first neural network model and a first output vector of each first transformer layer, where the language information corresponds to a target label;

perform feedback processing on the first neural network model by using a first target function, to obtain a first gradient, where the first target function is related to a distance between the first output label and the target label;

process the language information based on the first neural network submodel to obtain a second output label and a second output vector of each of the plurality of second transformer layers, where each second output vector corresponds to one first output vector;

perform feedback processing on the first neural network submodel by using a second target function, to obtain a second gradient, where the second target function is related to a distance between the second output label and the target label, a distance between the second output label and the first output label, and a distance between each first output vector and a corresponding second output vector; and

update the parameter of the first neural network submodel based on a target gradient, to obtain the second neural network model, where the target gradient is related to the first gradient and the second gradient.

Optionally, in an optional design of the ninth aspect, the determining module is further configured to:

determine a second neural network submodel based on the second neural network model, where the second neural network submodel is a part of the second neural network model, and a quantity of transformer layers included by the second neural network submodel is less than M;

determine a third neural network submodel based on the second neural network model, where the third neural network submodel is a part of the second neural network model, a quantity of transformer layers included by the third neural network submodel is the same as a quantity of transformer layers included by the second neural network model, a quantity of attention heads included by each of a plurality of transformer layers included by the third neural network submodel is the same as a quantity of attention heads included by a corresponding transformer layer in the second neural network submodel, and a quantity of neurons included by each of a plurality of intermediate layers included by the third neural network submodel is the same as a quantity of neurons included by a corresponding intermediate layer in the second neural network submodel; and

perform iterative training on the second neural network submodel by using the third neural network submodel as a teacher model and based on knowledge distillation, to update a parameter value of the second neural network submodel, so as to obtain a third neural network model, where an updated second neural network submodel is a part of the third neural network model.

According to a tenth aspect, this application provides a data processing device, including:

an obtaining module, configured to obtain a first neural network model, where the first neural network model includes a first transformer layer, the first transformer layer includes M attention heads, and M is a positive integer;
a receiving module, configured to receive performance requirement information sent by a terminal device;
a determining module, configured to determine a second neural network model based on the performance requirement information, where the second neural network model includes a second transformer layer corresponding to the first transformer layer, a quantity of attention heads included by the second transformer layer is less than M, the first neural network model is obtained by performing knowledge distillation training on an initial neural network model based on at least one width size, where each of the at least one width size indicates a quantity of attention heads included by a transformer layer, and the quantity of attention heads included by the second transformer layer is one of the at least one width size; and
a sending module, configured to send the second neural network model to the terminal device.

Optionally, in an optional design of the tenth aspect, the performance requirement information includes at least one of the following:
a precision requirement, a latency requirement, or a model compression ratio requirement.

Optionally, in an optional design of the tenth aspect, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the second neural network model is a part of the first neural network model.

Optionally, in an optional design of the tenth aspect, the first transformer layer further includes a first feed-forward layer, and the second transformer layer further includes a second feed-forward layer. The first feed-forward layer includes a first intermediate layer (intermediate layer), and the second feed-forward layer includes a second intermediate layer. A ratio of a quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, in an optional design of the tenth aspect, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head.

Optionally, in an optional design of the tenth aspect, a sum of absolute values of element values in a plurality of transformation matrices included by the first attention head is greater than a sum of absolute values of element values in a plurality of transformation matrices included by the second attention head.

Optionally, in an optional design of the tenth aspect, the M attention heads included by the first transformer layer are arranged in the following manner:
arranging the M attention heads based on capabilities of affecting the output result of the first neural network model by the M attention heads.

Optionally, in an optional design of the tenth aspect, a capability of affecting the output result of the first neural network model by each attention head included by the second transformer layer is greater than the capability of affecting the output result of the first neural network model by the second attention head.

Optionally, in an optional design of the tenth aspect, the determining module is further configured to:
determine first width size information of the second neural network model based on the performance requirement information, where the first width size information includes the quantity of attention heads included by the second transformer layer.

Optionally, in an optional design of the tenth aspect, the determining module is specifically configured to:
determine the first width size information of the second neural network model based on a first preset association relationship and the performance requirement information, where the first preset association relationship indicates a correspondence between the performance requirement information and the first width size information of the second neural network model.

The first preset association relationship is a preset function, an input of the preset function is the performance requirement information, and an output of the preset function is the first width size information of the second neural network model; or

the first preset association relationship is a preset table, and the preset table includes a plurality of pieces of performance requirement information and first width size information that is of the second neural network model and that corresponds to each piece of performance requirement information.

Optionally, in an optional design of the tenth aspect, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, in an optional design of the tenth aspect, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, in an optional design of the tenth aspect, the first neural network model further includes a fifth transformer layer and a sixth transformer layer. The first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

According to an eleventh aspect, an embodiment of this application provides an execution device, where the execution device may include a memory, a processor, and a bus system. The memory is configured to store a program, and the processor is configured to execute the program in the memory, to perform the method according to the first aspect and any optional design of the first aspect, the method according to the second aspect and any optional design of the second aspect, the method according to the third aspect and any optional design of the third aspect, or the method according to the eighth aspect and any optional design of the eighth aspect.

According to a sixteenth aspect, an embodiment of this application provides a training device, where the training device may include a memory, a processor, and a bus system. The memory is configured to store a program, and the processor is configured to execute the program in the memory, to perform the method according to the seventh aspect and any optional design of the seventh aspect.

According to a seventeenth aspect, an embodiment of this application provides a computer-readable storage medium. The computer-readable storage medium stores a computer program. When the computer program is run on a computer, the computer is enabled to perform the method according to the first aspect and any optional design of the first aspect, the method according to the second aspect and any optional design of the second aspect, the method according to the third aspect and any optional design of the third aspect, the method according to the fourth aspect and any optional design of the fourth aspect, or the method according to the eighth aspect and any optional design of the eighth aspect.

According to an eighteenth aspect, an embodiment of this application provides a computer program. When the computer program is run on a computer, the computer is enabled to perform the method according to the first aspect and any optional design of the first aspect, the method according to the second aspect and any optional design of the second aspect, the method according to the third aspect and any optional design of the third aspect, the method according to the fourth aspect and any optional design of the fourth aspect, or the method according to the eighth aspect and any optional design of the eighth aspect.

According to a nineteenth aspect, this application provides a chip system. The chip system includes a processor, configured to support an execution device or a training device to implement a function in the foregoing aspects, for example, send or process data or information in the foregoing methods. In a possible design, the chip system further includes a memory, and the memory is configured to store program instructions and data that are necessary for the execution device or the training device. The chip system may include a chip, or may include a chip and another discrete component.

Embodiments of this application provide a data processing method, including: obtaining the first neural network model and the available resource state of the terminal device, where the first neural network model includes the first transformer layer, the first transformer layer includes the M attention heads and the first feed-forward layer, the first feed-forward layer includes the first intermediate layer (intermediate layer), the first intermediate layer includes the N neurons, and M and N are positive integers; determining the second neural network model based on the available resource state, where the second neural network model is obtained based on the first neural network model, and the second neural network model meets at least one of the following conditions: the second neural network model includes the second transformer layer corresponding to the first transformer layer, and the quantity of attention heads included by the second transformer layer is less than M; or the second neural network model includes the second intermediate layer corresponding to the first intermediate layer, and the quantity of neurons included by the second intermediate layer is less than N; obtaining the to-be-processed language information; and processing the to-be-processed language information based on the second neural network model. In the foregoing manner, an appropriate model size may be determined based on the available resource state, and a part of the first neural network model is selected, based on the determined model size, as the second neural network model on which data processing is to be performed, thereby reducing a size of the model.

## BRIEF DESCRIPTION OF DRAWINGS

FIG. 1 is a schematic diagram of a structure of an artificial intelligence main framework;

FIG. 2 shows a natural language processing system;

FIG. 3 shows another natural language processing system;

FIG. 4 is a schematic diagram of a device related to natural language processing according to an embodiment of this application;

FIG. 5 is a schematic diagram of an architecture of a transformer layer;

FIG. 6 is a schematic diagram of an embodiment of a data processing method according to an embodiment of this application;

FIG. 7 is a schematic diagram of a structure of a neural network model according to an embodiment of this application;

FIG. 8 is a schematic diagram of a structure of a transformer layer;

FIG. 9 is a schematic diagram of an operation of an attention head (head);

FIG. 10 is a schematic diagram of width scaling of a model according to an embodiment of this application;

FIG. 11 is a schematic diagram of an embodiment of a data processing method according to an embodiment of this application;

FIG. 12 is a schematic diagram of depth scaling of a model according to an embodiment of this application;

FIG. 13 is a schematic diagram of an embodiment of a data processing method according to an embodiment of this application;

FIG. 14 is a schematic diagram of an embodiment of a data processing method according to an embodiment of this application;

FIG. 15 is a schematic diagram of an embodiment of a data processing method according to an embodiment of this application;

FIG. 16 is a schematic diagram of a structure of a data processing device according to an embodiment of this application;

FIG. 17 is a schematic diagram of a structure of a data processing device according to an embodiment of this application;

FIG. 18 is a schematic diagram of a structure of a data processing device according to an embodiment of this application;

FIG. 19 is a schematic diagram of a structure of a data processing device according to an embodiment of this application;

FIG. 20 is a schematic diagram of a structure of a data processing device according to an embodiment of this application;

FIG. 21 is a schematic diagram of a structure of an execution device according to an embodiment of this application;

FIG. 22 is a schematic diagram of a structure of a training device according to an embodiment of this application; and

FIG. 23 is a schematic diagram of a structure of a chip according to an embodiment of this application.

## DESCRIPTION OF EMBODIMENTS

The following describes embodiments of the present invention with reference to accompanying drawings in embodiments of the present invention. Terms used in an implementation part of the present invention are intended only to explain specific embodiments of the present invention, and not intended to limit the present invention.

The following describes embodiments of this application with reference to the accompanying drawings. A person of ordinary skill in the art may learn that the technical solutions provided in embodiments of this application are also applicable to a similar technical problem as a technology develops and a new scenario emerges.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a manner for describing objects having a same attribute in embodiments of this application. In addition, the terms "include", "have" and any other variants mean to cover a non-exclusive inclusion, so that a process, method, system, product, or device that includes a list of units is not necessarily limited to those units, but may include other units that are not clearly listed or that are inherent to these processes, methods, products, or devices.

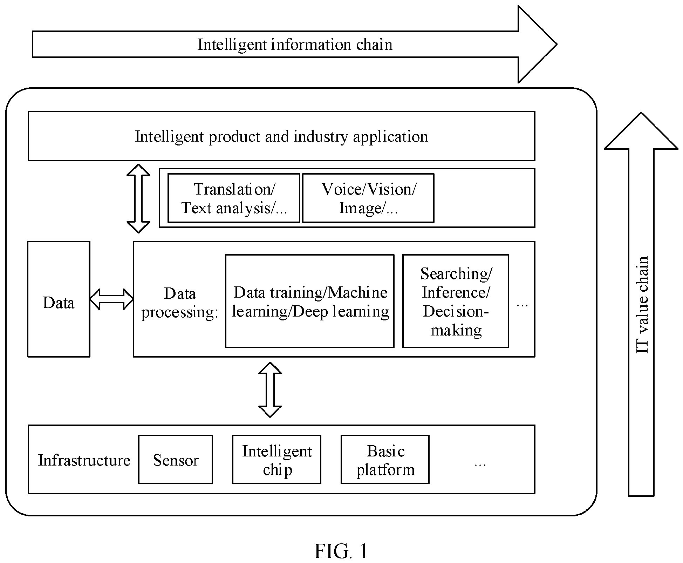

An overall working procedure of an artificial intelligence system is first described. FIG. 1 is a schematic diagram of a structure of an artificial intelligence main framework. The following describes the foregoing artificial intelligence theme framework from two dimensions: "intelligent information chain" (horizontal axis) and "IT value chain" (vertical axis). The "intelligent information chain" reflects a general process from data obtaining to data processing. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides calculation capability support for the artificial intelligence system, communicates with an external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The base platform includes related platform assurance and support such as a distributed computing framework and a network, and may include cloud storage and computing, and an interconnection and interworking network, and the like. For example, the sensor communicates with the outside to obtain data, and the data is provided to an intelligent chip in a distributed computing system for computation, where the distributed computing system is provided by the base platform.

(2) Data

Data from a higher layer of the infrastructure indicates a data source in the field of artificial intelligence. The data relates to a graph, an image, a voice, and text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.

In machine learning and deep learning, intelligent information of the data may be modeled, extracted, preprocessed, trained, or the like in a symbolized and formalized manner.

Inference is a process of simulating intelligent human inference methods in computers or intelligent systems and using, based on an inference control policy, formalized information to carry out machine thinking and resolve problems, and typical functions are searching and matching.

Decision-making is a process of making a decision after intelligent information inference, and usually provides functions such as classification, ranking, and prediction.

(4) General capabilities

After data processing mentioned above is performed on data, some general capabilities may be further formed based on a data processing result, for example, an algorithm or a general system, such as translation, text analysis, computer vision processing, speech recognition, and image recognition.

(5) Intelligent product and industry application

The intelligent products and industry applications refer to products and applications of an artificial intelligence system in various fields, and are encapsulation for an overall solution of artificial intelligence, to productize intelligent information decision-making and implement applications. Application fields thereof mainly include an intelligent terminal, intelligent transportation, intelligent healthcare, autonomous driving, a safe city, and the like.

This application may be applied to a natural language processing field in the artificial intelligence field. The following describes a plurality of application scenarios in which a plurality of applications are implemented in a product.

To better understand the solutions in embodiments of this application, the following briefly describes a possible application scenario in embodiments of this application with reference to FIG. 1 to FIG. 3.

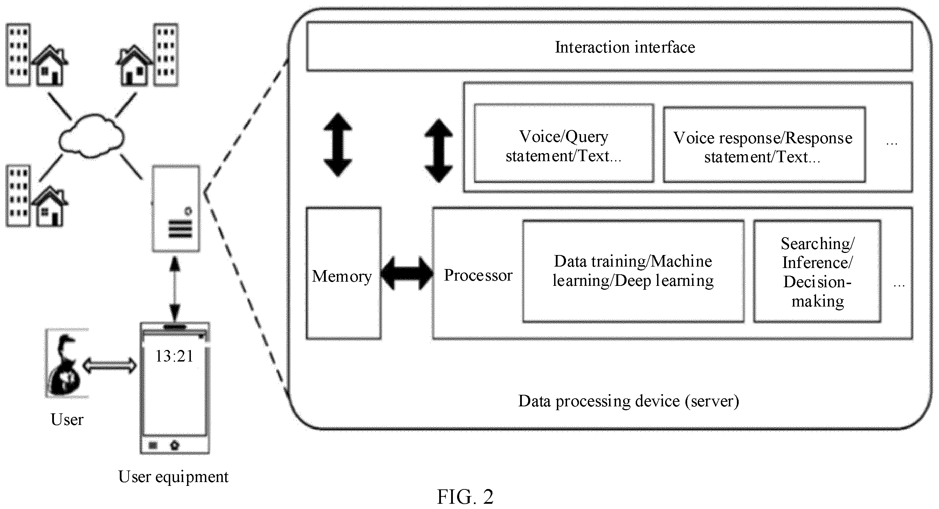

FIG. 2 shows a natural language processing system. The natural language processing system includes user equipment and a data processing device. The user equipment includes an intelligent terminal such as a mobile phone, a personal computer, or an information processing center. The user equipment is an initiating end of natural language data processing. As an initiator of a request for language questioning and answering, querying, or the like, a user usually initiates the request by using the user equipment.

The data processing device may be a device or a server having a data processing function, such as a cloud server, a network server, an application server, or a management server. The data processing device receives, through an interaction interface, a question such as a query statement/voice/text from the intelligent terminal; then performs, by using a memory storing data and a processor processing data, language data processing in a manner of machine learning, deep learning, searching, inference, decision-making, or the like; and feeds back a processing result to the user equipment. The memory in the data processing device may be a general name, and includes a local storage and a database storing historical data. The database may be located on the data processing device, or may be located on another network server.

In the natural language processing system shown in FIG. 2, the user equipment may receive an instruction of the user. For example, the user equipment may receive a piece of text entered by the user, and then initiate a request to the data processing device, so that the data processing device executes a natural language processing application (for example, text classification, text inference, named entity recognition, or translation) on the piece of text obtained by the user equipment, to obtain a processing result (for example, a classification result, an inference result, a named entity recognition result, or a translation result) of a corresponding natural language processing application for the piece of text. For example, the user equipment may receive a piece of Chinese text entered by the user, and then initiate a request to the data processing device, so that the data processing device performs entity classification on the piece of Chinese text, to obtain an entity classification result for the piece of Chinese text. For example, the user equipment may receive a piece of Chinese text entered by the user, and then initiate a request to the data processing device, so that the data processing device translates the piece of Chinese text into English, to obtain an English translation for the piece of Chinese text.

In this embodiment of this application, the data processing device may receive, through the interaction interface, a request for obtaining a task model related to natural language processing (natural language processing, NLP) and a performance upper limit parameter from the user equipment. The performance upper limit parameter includes but is not limited to at least one of precision, a latency, or a model compression ratio. The data processing device may calculate, based on a trained scalable transformer model and a performance upper limit parameter that needs to be met and that is uploaded by the user equipment, a size of a model suitable for the user equipment when the size of the model is met, extract a subnetwork of the size, and send the subnetwork to the user equipment.

In FIG. 2, the data processing device may perform the data processing method in embodiments of this application.

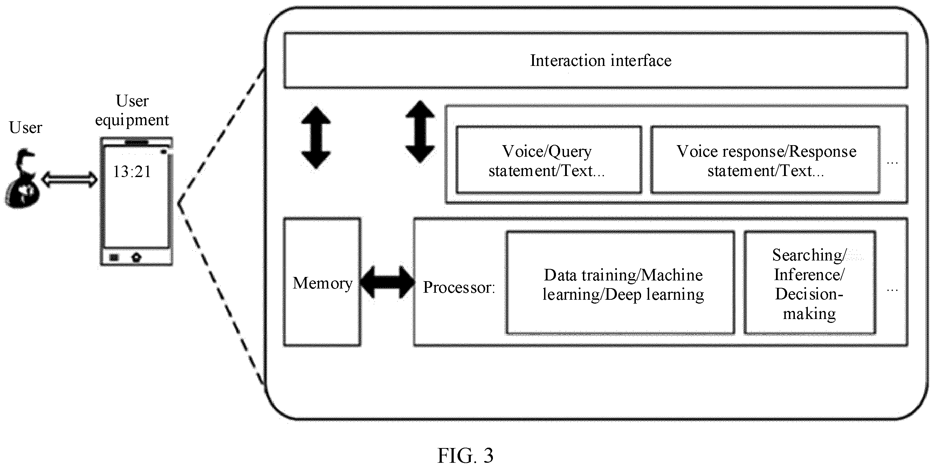

FIG. 3 shows another natural language processing system. In FIG. 3, user equipment is directly used as a data processing device. The user equipment can directly receive an input from a user, and the input is directly processed by using hardware of the user equipment. A specific process is similar to that in FIG. 2. Refer to the foregoing descriptions, and details are not described herein again.

In the natural language processing system shown in FIG. 3, the user equipment may receive an instruction of the user. For example, the user equipment may receive a piece of text entered by the user, and then the user equipment executes a natural language processing application (for example, text classification, text inference, named entity recognition, or translation) on the piece of text, to obtain a processing result (for example, a classification result, an inference result, a named entity recognition result, or a translation result) of a corresponding natural language processing application for the piece of text. For example, the user equipment may receive a piece of Chinese text entered by the user, and perform entity classification on the piece of Chinese text, to obtain an entity classification result for the piece of Chinese text. For example, the user equipment may receive a piece of Chinese text entered by the user, and translate the piece of Chinese text into English, to obtain an English translation for the piece of Chinese text.

In this embodiment of this application, the user equipment may store a subnetwork model, calculate, based on a current resource condition of the user equipment (including but not limited to at least one of current power consumption, a computing capability, and a storage parameter of an edge device), a size of a model that meets the current resource condition of the user equipment each time before an operating system (operating system, OS) or an application (application, APP) invokes the model, and input a size of an appropriate model obtained through calculation to the stored subnetwork model to obtain a current state model after dynamic cropping and execute an inference task.

In FIG. 3, the user equipment may perform the data processing method in embodiments of this application.

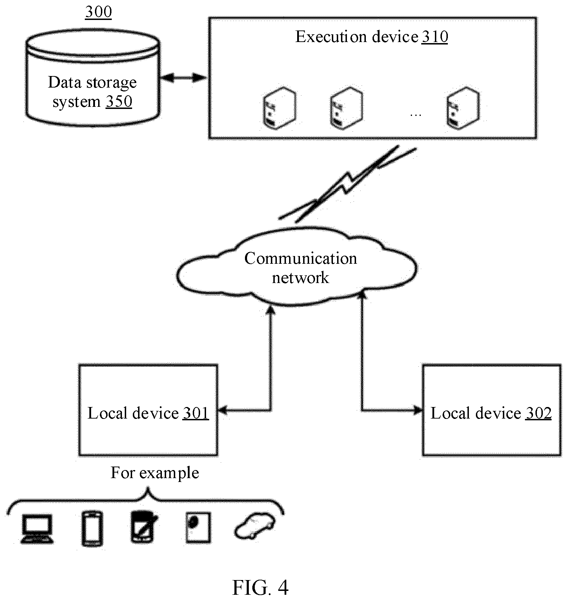

FIG. 4 is a schematic diagram of a device 300 related to natural language processing according to an embodiment of this application.

The user equipment in FIG. 2 and FIG. 3 may be specifically a local device 301 or a local device 302 in FIG. 4, and the data processing device in FIG. 2 may be specifically an execution device 310 in FIG. 4. A data storage system 350 may store data to be processed by the execution device 310. The data storage system 350 may be integrated into the execution device 310, or may be disposed on a cloud or another network server.

The processor in FIG. 2 and FIG. 3 may perform data training/machine learning/deep learning by using a neural network model or another model, and execute a natural language processing application (for example, text classification, sequence labeling, reading comprehension, text generation, text inference, or translation) on a text sequence by using a model obtained through final data training or learning, to obtain a corresponding processing result.

Because embodiments of this application relate to massive application of a neural network, for ease of understanding, the following first describes related terms and related concepts such as a neural network in embodiments of this application.

(1) Neural network

The neural network may include a neuron. The neuron may be an operation unit that uses xs and an intercept of 1 as an input. An output of the operation unit may be as follows:

$$h_{W,b}(x) = f(W^T x) = f\left(\sum_{s=1}^{n} W_s x_s + b\right),$$

where

s = 1, 2, ..., or n, n is a natural number greater than 1, $W_s$ is a weight of xs, b is a bias of the neuron, and f indicates an activation function (activation function) of the neuron, where the activation function is used for introducing a non-linear characteristic into the neural network, to convert an input signal in the neuron into an output signal. The output signal of the activation function may be used as an input to a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Transformer layer

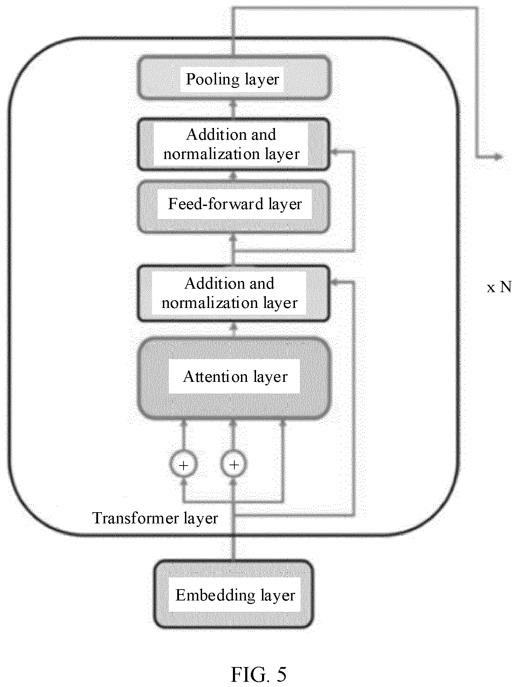

FIG. 5 is a schematic diagram of an architecture of a transformer layer. As shown in FIG. 5, a neural network includes an embedding layer and at least one transformer layer. The at least one transformer layer may be N transformer layers (N is an integer greater than 0), and each transformer layer includes an attention layer, an addition and normalization (add & norm) layer, a feed-forward (feed forward) layer, and an addition and normalization layer that are sequentially adjacent to each other. At the embedding layer, embedding processing is performed on a current input to obtain a plurality of feature vectors. At the attention layer, P input vectors are obtained from a previous layer of the first transformer layer. An intermediate vector corresponding to any first input vector is obtained by using the first input vector in the P input vectors as a center and based on an association degree between each input vector within a preset attention window range and the first input vector. In this way, P intermediate vectors corresponding to the P input vectors are determined. At the pooling layer, the P intermediate vectors are merged into Q output vectors, where a plurality of output vectors obtained from a last transformer layer of the transformer layer are used as feature representations of the current input.

The following describes the foregoing steps in detail with reference to specific examples.

First, at the embedding layer, embedding processing is performed on the current input to obtain the plurality of feature vectors.

The embedding layer may be referred to as an input embedding (input embedding) layer. The current input may be a text input, for example, may be a piece of text, or may be a sentence. The text may be Chinese text, or may be English text, or may be text in another language. After the current input is obtained at the embedding layer, embedding processing may be performed on each word in the current input, to obtain a feature vector of the word. In some embodiments, as shown in FIG. 1, the embedding layer includes an input embedding layer and a positional encoding (positional encoding) layer. At the input embedding layer, word embedding processing may be performed on each word in the current input, to obtain a word embedding vector of the word. At the positional encoding layer, a position of each word in the current input may be obtained, to generate a position vector for the position of each word. In some examples, the position of each word may be an absolute position of the word in the current input. For example, the current input is "what date should the ant credit pay be paid back", where a position of "what" may be represented as a first position, and a position of "date" may be represented as a second position, .... In some examples, the position of each word may be a relative position between the words. An example in which the current input is "what date should the ant credit pay be paid back" is still used. The position of "what" may be represented as before "date", and the position of "date" may be represented as after "what", before "should", .... When the word embedding vector and the position vector of each word in the current input are obtained, the position vector of each word and the corresponding word embedding vector may be combined to obtain a feature vector of each word, in other words, obtain the plurality of feature vectors corresponding to the current input. The plurality of feature vectors may be represented as an embedding matrix with a preset dimension. A quantity of feature vectors in the plurality of feature vectors may be set to M, and the preset dimension is an H dimension. In this case, the plurality of feature vectors may be represented as an M x H embedding matrix.

Second, the P input vectors are obtained from the previous layer of the first transformer layer. The intermediate vector corresponding to the any first input vector is obtained by using the first input vector in the P input vectors as a center and based on the association degree between each input vector within the preset attention window range and the first input vector. In this way, the P intermediate vectors corresponding to the P input vectors are determined. The attention layer may also be referred to as a multi-head attention (multi-head attention) layer. In an example, the attention layer may be a fixed window multi-headed attention (fixed window multi-head attention) layer.

In some embodiments, the first transformer layer may be a next layer of the embedding layer, and the P input vectors are the plurality of feature vectors obtained from the embedding layer. In some embodiments, the at least one transformer layer in the neural network provided in this embodiment of this specification further includes a second transformer layer. If the second transformer layer is the previous layer of first self-attention, the P input vectors are P output vectors output from the second transformer layer. At the last transformer layer in the neural network, the plurality of output vectors obtained through the foregoing steps may be used as the feature representations of the current input. The feature representation is a feature representation suitable for computer processing of the current input, and may be used for tasks such as text similarity, text classification, reading comprehension, and machine translation.

(3) Attention mechanism (attention mechanism)

The attention mechanism simulates an internal process of biological observation behavior, and is a mechanism that aligns internal experience with external feeling to increase observation precision of some regions. The mechanism can quickly select high-value information from a large amount of information by using limited attention resources. The attention mechanism is widely used in natural language processing tasks, especially machine translation, because the attention mechanism can quickly extract an important feature of sparse data. A self-attention mechanism (self-attention mechanism) is improvement of the attention mechanism. The self-attention mechanism becomes less dependent on external information and is better at capturing an internal correlation of data or features. An essential idea of the attention mechanism can be expressed by the following formula:

$$Attention\left(Query, Source\right) = \sum_{i=1}^{L_x} Similarity(Query, Key_i) * Value_i$$

Lx=‖Source‖ represents a length of a source. A meaning of the formula is that constituent elements in the source are considered to be constituted by a series of data pairs. In this case, given an element Query in a target Target, a weight coefficient of a value corresponding to each key is obtained by calculating similarity or a correlation between Query and the key, and then weighted summation is performed on values to obtain a final attention value. Therefore, in essence, the attention mechanism is to perform weighted summation on values of the elements in the source, where Query and a key are used to calculate a weight coefficient of a corresponding value. Conceptually, the attention mechanism can be understood as a mechanism for selecting a small amount of important information from a large amount of information and focusing on the important information, and ignoring most unimportant information. A focusing process is reflected in calculation of a weight coefficient. A larger weight indicates that a value corresponding to the weight is more focused. In other words, the weight indicates importance of information, and the value indicates the information corresponding to the weight. The self-attention mechanism may be understood as an intra attention (intra attention) mechanism. The attention mechanism occurs between the element Query in the target and all elements in the source. The self-attention mechanism is an attention mechanism that occurs between elements in the source or between elements in the target, and may also be understood as an attention calculation mechanism in a special case of Target = Source. A specific calculation process of the self-attention mechanism is the same except that a calculation object changes.

(4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. By using NLP and its components, we can manage very large chunks of text data, or perform a lot of automated tasks, and resolve various problems, such as automatic summarization (automatic summarization), machine translation (machine translation, MT), named entity recognition (named entity recognition, NER), relation extraction (relation extraction, RE), information extraction (information extraction, IE), emotion analysis, speech recognition (speech recognition), question answering (question answering) system, and topic segmentation.

For example, there may be the following types of natural language processing tasks.

Sequence labeling: A model needs to provide a classification category for each word in a sentence based on a context. For example, the sequence labeling is Chinese word segmentation, part-of-speech tagging, named entity recognition, or semantic role tagging.

Classification task: A classification value is output for the entire sentence. For example, the classification task is text classification.

Sentence relation inference: Two sentences are given, and whether the two sentences have a nominal relation is determined. For example, the sentence relation inference is entilment, QA, semantic rewriting, or natural language inference.

Generative task: One piece of text is output and another piece of text is generated. For example, the generative task is machine translation, text summarization, writing poems and sentences, describing a picture orally.

The following provides some natural language processing examples.

Word segmentation (word segmentation or word breaker, WB): Continuous natural language text is segmented into lexical sequences with semantic rationality and integrity, to eliminate a cross ambiguity. Example sentence: zhi bi ye he shang wei bi ye de tong xue. Word segmentation 1: zhi biye he shangwei biye de tongxue. Word segmentation 2: zhi biye heshang wei biye de tongxue.

Named entity recognition (named entity recognition, NER): Entities (person, place, institution, time, works, and the like) having specific meanings in natural language text are recognized, to integrate unknown words at a granularity. Example sentence: tian shi ai mei li zai xian guan kan. Word segmentation: tianshi ai meili zaixian guankan. Entity: Angel Amelie -> Movie.

Part-of-speech tagging (part-of-speech tagging): A part-of-speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity. Comment: fang jian li hai ke yi xin shang ri chu. Ambiguity 1: fang jian hai ke yi. Ambiguity 2: ke yi xin shang ri chu. Part of speech: fang jian li (subject), hai ke yi (predicate), xin shang ri chu (verb-object phrase).

Word vector and semantic similarity (word embedding & semantic similarity): Words are represented in a vectorized manner, and semantic similarity of the words is calculated based on the vectorized representation, to resolve a problem of linguistic similarity between the words. For example, which one (dai gua/cao mei) does xi gua approximate? Vectorized representation: xi gua (0.1222, 0.22333, ...); similarity calculation: dai gua (0.115) and cao mei (0.325); and vectorized representation: (-0.333, 0.1223, ...) (0.333, 0.3333, ...).

Text semantic similarity (text semantic similarity): Based on massive data in the entire network and a deep neural network technology, semantic similarity between pieces of text is calculated, to resolve a problem of text semantic similarity. For example, which one (qian pai zhao zen me zhuang/ru he ban li Beijing pai zhao) does che tou ru he fang zhi che pai approximate? Vectorized representation: che tou ru he fang zhi che pai (0.1222, 0.22333, ...); similarity calculation: qian pai zhao zen me zhuang (0.762) and ru he ban li Beijing pai zhao (0.486); and vectorized representation: (-0.333, 0.1223, ...) (0.333, 0.3333, ...).

The data processing method provided in embodiments of this application relates to natural language text processing, and may be specifically applied to data processing methods such as data training, machine learning, and deep learning. Symbolized and formalized intelligent information modeling, extraction, preprocessing, training, and the like are performed on training data, to finally obtain a trained neural network model. In addition, in the data processing method provided in embodiments of this application, the foregoing trained neural network model may be used to input input data (for example, to-be-processed language information) into the trained neural network model, so as to obtain output data (for example, a processing result corresponding to a target task). It should be noted that a neural network training method and the data processing method provided in embodiments of this application are inventions generated based on a same idea, and may alternatively be understood as two parts in a system or two phases of an overall process, for example, a model training phase and a model application phase.

The data processing method provided in embodiments of this application is first described by using the application phase as an example.

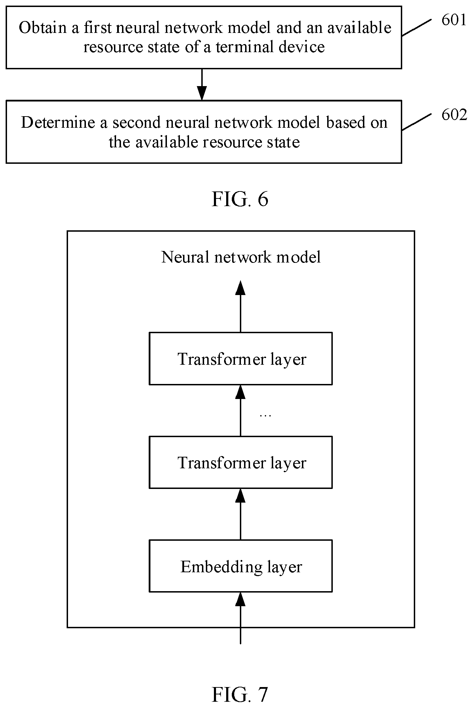

FIG. 6 is a schematic diagram of an embodiment of a data processing method according to an embodiment of this application. The data processing method provided in this embodiment of this application may be applied to a terminal device such as a mobile phone, a tablet computer, a notebook computer, or an intelligent wearable device. As shown in FIG. 6, the data processing method provided in this embodiment of this application includes the following steps.

601: Obtain a first neural network model and an available resource state of a terminal device, where the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers.

In this embodiment of this application, the terminal device may send performance requirement information of the terminal device to a cloud-side device.

Specifically, the terminal device may send, to the cloud-side device, a request for obtaining an NLP-related task model, and upload to-be-met performance requirement information. The performance requirement information includes but is not limited to at least one of a precision requirement, a latency requirement, or a model compression ratio requirement.

In this embodiment of this application, the cloud-side device may store an initial neural network model based on a transformer structure. After receiving the performance requirement information sent by the terminal device, the cloud-side device may determine, based on the received performance requirement information, size information of a model suitable for the terminal device. Specifically, when the precision requirement included by the performance requirement information is high, it may be determined that a size of the model suitable for the terminal device is large; when the latency requirement included by the performance requirement information is high, it may be determined that the size of the model suitable for the terminal device is small; or when a model compression ratio included by the performance requirement information is high, it may be determined that the size of the model suitable for the terminal device is large. Specifically, the cloud-side device may determine, based on a preset function relationship, the size information of the model suitable for the terminal device, or determine, based on a preset correspondence, the size information of the model suitable for the terminal device (for example, in a table lookup manner). The following specifically describes a neural network model based on the transformer structure and how to quantize size information of the initial neural network model.

FIG. 7 is a schematic diagram of a structure of a neural network model according to an embodiment of this application. As shown in FIG. 7, a neural network model based on a transformer layer may include an embedding layer and a plurality of transformer layers that are sequentially connected. As understood by a person skilled in the art, a transformer model is mostly used to execute a natural language processing NLP task. It should be understood that the structure in FIG. 7 is merely an example, and a quantity of transformer layers may be set as required. For example, only one transformer layer may be set, or more transformer layers may be set. The neural network model determines, based on N output vectors obtained by transformer layers, feature vectors corresponding to a current node.

The following describes a specific working process of each layer.

At the embedding layer, embedding processing is performed on a current input, to obtain a plurality of feature vectors. A core feature of the transformer model is a unique attention mechanism used by the transformer model. When a natural language, for example, a sentence, is processed, the transformer model uses the attention mechanism to assign different attention coefficients to word vectors in the sentence, so as to more comprehensively consider impact of a context in the sentence on words. At the embedding layer, N embedding vectors XI are obtained based on a node feature and position encoding of each node in a current sequence. An attention layer is connected to the embedding layer, and the N embedding vectors are obtained from the embedding layer as input vectors. The input vectors are aggregated based on association degrees between the N input vectors to obtain N output vectors, and the N output vectors are output to a subsequent transformer layer. A transformer layer obtains an output of a previous layer as an input vector and performs an operation similar to that of the previous transformer layer.

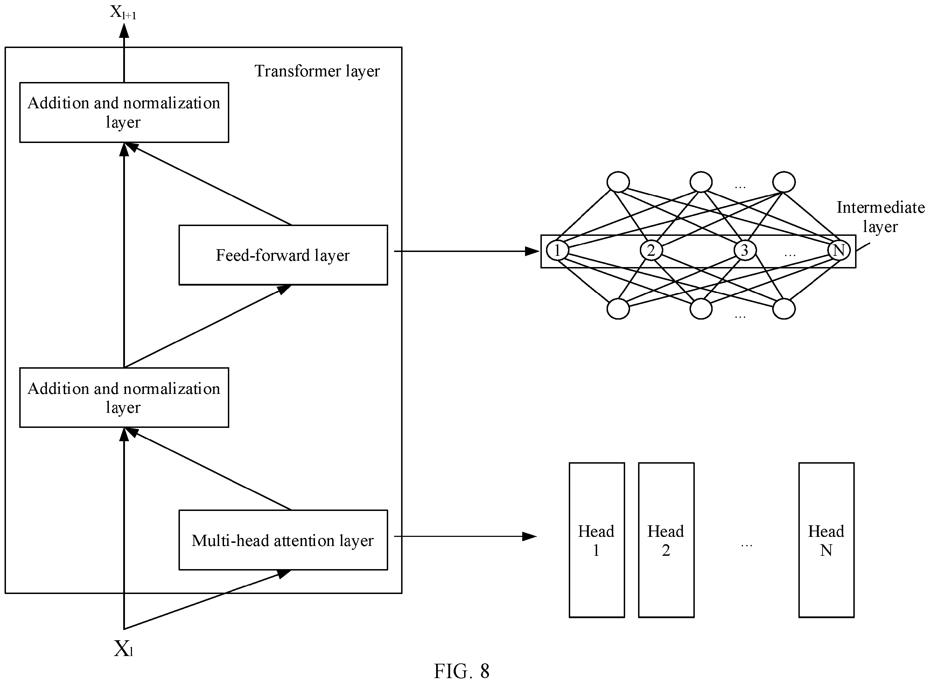

FIG. 8 is a schematic diagram of a structure of a transformer layer. For transformer layers of neural networks in embodiments of this application, refer to the structure shown in FIG. 8. As shown in FIG. 8, the transformer layer includes a multi-head attention layer, an addition and normalization (add & norm) layer, a feed-forward (feed-forward) layer, and an addition and normalization layer that are sequentially adjacent to each other.

The multi-head attention layer obtains N input vectors XI from a previous layer of the multi-head attention layer, and the N input vectors XI may also be represented as a matrix X. Vectors are transformed by using a self-attention mechanism and based on an association degree between the vectors, to obtain N output vectors. The N output vectors may also be represented as a matrix Y. It may be understood that, when the multi-head attention layer is a layer directly connected to an embedding layer, for example, the transformer layer directly connected to the embedding layer in FIG. 7, an input vector obtained by the multi-head attention layer is an embedding vector output by the embedding layer. When the multi-head attention layer is a multi-head attention layer included by a subsequent transformer layer, for example, a multi-head attention layer included by a transformer layer directly connected to a previous transformer layer in FIG. 7, an input vector obtained by the multi-head attention layer is an output vector of the previous transformer layer.

At the multi-head attention layer, a multi-head attention (multi-head attention, MHA) based MHA layer includes a plurality of attention heads (heads) (a Head 1, a Head 2, ..., and a Head N shown in FIG. 8).

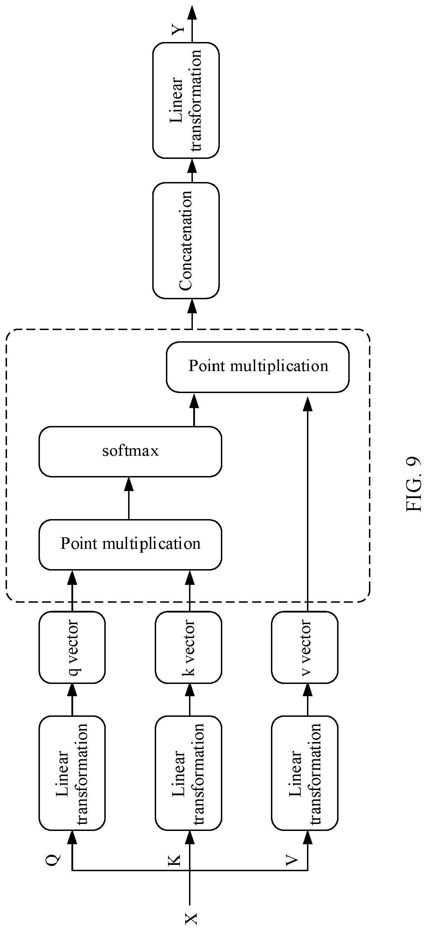

FIG. 9 is a schematic diagram of an operation of an attention head (head). The schematic diagram shows how the attention head (head) transforms an input matrix X into an output matrix Y. As shown in FIG. 9, each input vector Xi in N input vectors <X1, X2, ..., XN> is transformed separately by using a first transformation matrix Q, a second transformation matrix K, and a third transformation matrix V, to obtain a first intermediate vector (q vector), a second intermediate vector (k vector), and a third intermediate vector (v vector) that correspond to the input vector. During transformation, linear transformation may be performed, separately by using the first transformation matrix Q, the second transformation matrix K, and the third transformation matrix V, on the input matrix X constituted by the N input vectors, to obtain a Q matrix, a K matrix, and a V matrix of the input matrix, and then the matrices are separately split, to obtain the vector q, the vector k, and the vector v that correspond to each input vector. For any $i^{th}$ input vector Xi in the N input vectors, each association degree between the $i^{th}$ input vector Xi and each input vector Xj is determined based on a point multiplication operation between a first intermediate vector (q vector, qi) corresponding to the $i^{th}$ input vector and a second intermediate vector (k vector, kj) corresponding to the input vector Xj. Although a point multiplication result of qi and kj may alternatively be directly determined as the association degree, more typically, the point multiplication result is first divided by a constant, then a softmax operation is performed, and an operation result is used as the association degree between the input vectors Xi and Xj, that is:

$$\alpha_{i,j} = softmax\left(\frac{q_i \cdot k_j}{\sqrt{d_k}}\right).$$

Therefore, each association degree $\alpha i$ between the $i^{th}$ input vector Xi and each input vector Xj and j may be used as weighting factors to perform weighted combination on a third intermediate vector (v vector, vj) corresponding to each input vector Xj, to obtain an $i^{th}$ combined vector Ci corresponding to the $i^{th}$ input vector Xi:

$$C_i = \sum_{j=1}^{N} \alpha_{i,j} v_j.$$

Therefore, a vector sequence <C1, C2, ..., CN> or a matrix C of N combined vectors corresponding to the N input vectors may be obtained. N output vectors may be obtained based on the sequence of the combined vectors. Specifically, in an embodiment, the vector sequence of the N combined vectors may be directly used as the N output vectors, that is, Yi = Ci. In this case, the output matrix Y is a combined vector matrix C, and may also be written as:

$$Y = softmax\left(\frac{QK^T}{\sqrt{d_k}}\right) V.$$

The foregoing is a description of a processing process of an attention head (head). In an MHA architecture, an MHA layer maintains m sets of transformation matrices, and each set of transformation matrices includes the first transformation matrix Q, the second transformation matrix K, and the third transformation matrix V. Therefore, the foregoing operations may be performed in parallel to obtain m combined vector sequences (that is, m matrices C), and each vector sequence includes N combined vectors obtained based on one set of transformation matrices. In this case, the MHA layer concatenates the obtained m combined vector sequences to obtain a concatenated matrix, and then transforms the concatenated matrix by using a fourth transformation matrix W to obtain the final output matrix Y. The output matrix Y is split, that is, corresponds to the N output vectors <Y1, Y2, ..., YN>. According to the foregoing operation process, at the MHA layer, a transformation operation is performed based on an association degree between the N input vectors to obtain the N output vectors.

As shown in FIG. 8, the transformer layer includes the feed-forward layer, where the feed-forward layer includes an input layer, an intermediate layer (intermediate layer), and an output layer, and the intermediate layer includes a plurality of neurons.

As described above, the neural network model may include a plurality of transformer layers. In an embodiment, the plurality of transformer layers may be stacked and connected in a residual network manner to form the neural network model.

In a case of a plurality of transformer layers, in an embodiment, the neural network model may aggregate N output vectors obtained at each transformer layer in the plurality of transformer layers, to obtain feature vectors corresponding to a current node. In another embodiment, the neural network model may alternatively extract only N output vectors obtained at a last transformer layer, and aggregate the N output vectors to obtain a feature vector of a current node.

It may be understood that the neural network model depends on a large quantity of parameters in a calculation process of determining the feature vector of the current node, for example, parameters in the foregoing transformation matrices (the Q matrix, the K matrix, the V matrix, and the like). These parameters need to be determined by training the neural network model. In different embodiments, the neural network model may be trained by using different tasks.

In this embodiment of this application, a cloud-side device may store the neural network model (the initial neural network model) based on the foregoing transformer structure. After receiving the performance requirement information sent by the terminal device, the cloud-side device may determine, based on the received performance requirement information, the size information of the model suitable for the terminal device. The size information may include a width size information and a depth size information of the initial neural network model. Specifically, the width size information may include a quantity of attention heads included by each transformer layer in the neural network model and a quantity of neurons included by the intermediate layer (intermediate layer) of the feed-forward layer, and the depth size information may include a quantity of transformer layers included by the neural network model.

In this embodiment of this application, calculation in a multi-head attention mechanism may be split into calculation of each attention head, and then calculation results are added. Therefore, the MHA layer may be scaled based on a quantity of attention heads. A quantity of neurons included by an intermediate layer (intermediate layer) of a fully-connected network (the feed-forward layer) is changed, so that the intermediate layer (intermediate layer) of the fully-connected network (the feed-forward layer) is also scalable. For a transformer layer, a width may be scaled based on an attention head in an MHA and a neuron at an intermediate layer of a feed-forward layer. For example, if a BERT base model has 12 attention heads, there may be 12 options for scaling a corresponding width size, that is, the width may be any one of 1, 2, ..., and 12. Similarly, any quantity of neurons may also be retained at an intermediate layer of a feed-forward layer.

In this embodiment of this application, after determining the size information, the cloud-side device may determine the first neural network model based on the size information. The first neural network model is a part of the initial neural network model, and a width size and a depth size of the first neural network model are the determined size information. The cloud-side device may send the determined first network model to the terminal device, so that the terminal device can store the first neural network model sent by the cloud-side device.

In this embodiment of this application, the terminal device may obtain the first neural network model, where the first neural network model includes the first transformer layer, the first transformer layer includes the M attention heads and the first feed-forward layer, the first feed-forward layer includes the first intermediate layer (intermediate layer), the first intermediate layer includes the N neurons, and M and N are positive integers.

In this embodiment of this application, the terminal device may obtain the available resource state. The available resource state may include at least one of the following: power consumption of the terminal device, a computing capability of the terminal device, or an available storage size of the terminal device. For example, when the terminal device simultaneously runs many applications that occupy memory and computing resources, the power consumption of the terminal device is high, and the computing capability of the terminal device is poor. In this case, the terminal device may determine to select a part of models from the first neural network model as models for data processing.

"A part" may be understood as: each attention head included by the second transformer layer is one of the M attention heads included by the first transformer layer; or each neuron included by the second intermediate layer is one of the M neurons included by the first intermediate layer. In other words, the first neural network model may be tailored to obtain a second neural network model, where attention heads in a transformer layer in the second neural network model are attention heads in a transformer layer in the first neural network model, and neurons in each intermediate layer of the transformer layer in the second neural network model are neurons at an intermediate layer in the first neural network model.

It should be noted that, that each attention head included by the second transformer layer is one of the M attention heads included by the first transformer layer may be understood as follows: A parameter of each attention head included by the second transformer layer is consistent with a parameter of one of the M attention heads included by the first transformer layer; and that each neuron included by the second intermediate layer is one of the M neurons included by the first intermediate layer may be understood as follows: A parameter of each neuron included by the second intermediate layer is consistent with a parameter of one of the M attention heads included by the first intermediate layer.

602: Determine the second neural network model based on the available resource state, where the second neural network model is obtained based on the first neural network model.

In this embodiment of this application, the second neural network model meets at least one of the following conditions:

the second neural network model includes the second transformer layer corresponding to the first transformer layer, where a quantity of attention heads included by the second transformer layer is less than M; or the second neural network model includes the second intermediate layer corresponding to the first intermediate layer, where a quantity of neurons included by the second intermediate layer is less than N.

In this embodiment of this application, the terminal device may determine first width size information or second width size information of the second neural network model based on the available resource state. The first width size information includes the quantity of attention heads included by the second transformer layer, and the second width size information includes the quantity of neurons included by the second intermediate layer.

Optionally, the terminal device may determine the first width size information or the second width size information of the second neural network model based on a preset association relationship and the available resource state. The preset association relationship indicates a correspondence between the available resource state and the first width size information of the second neural network model, or a correspondence between the available resource state and the second width size information of the second neural network model. The preset association relationship is a preset function; and an input of the preset function is the available resource state, and an output of the preset function is the first width size information of the second neural network model; or an input of the preset function is the available resource state, and an output of the preset function is the second width size information of the second neural network model; or the preset association relationship is a preset table; and the preset table includes a plurality of available resource states and first width size information that is of the second neural network model and that corresponds to each available resource state; or the preset table includes a plurality of available resource states and second width size information that is of the second neural network model and that corresponds to each available resource state.

Optionally, a ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio. The first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

In this embodiment of this application, in a scenario in which a compression ratio of a model size needs to be quantized, when quantities of attention heads reserved at transformer layers of the second neural network model are the same, and ratios of quantities of attention heads reserved at the transformer layers (a ratio of a quantity of attention heads included by the second transformer layer to a quantity of attention heads included by the first transformer layer) to quantities of neurons reserved at intermediate layers of feed-forward layers of the transformer layers (a ratio of a quantity of neurons included by the second intermediate layer to a quantity of neurons included by the first intermediate layer) are the same, the size of the second neural network model may be obtained based on a product of the compression ratio and a size of a transformer model on a cloud side. A manner of calculating the model compression ratio may be (a maximum width of the second neural network model x a maximum depth of the second neural network model)/(a depth of a transformer layer of the cloud-side device x a width of the transformer of the cloud-side device).

In this embodiment of this application, the quantity of attention heads included by the second transformer layer is less than M, or the quantity of neurons included by the second intermediate layer is less than N.

Optionally, the quantity of attention heads included by the second transformer layer is less than M.

Optionally, the quantity of neurons included by the second intermediate layer is less than N.

Optionally, the quantity of attention heads included by the second transformer layer is less than M, and the quantity of neurons included by the second intermediate layer is less than N.

In this embodiment of this application, compared with the second neural network model, the second neural network model has a relatively small quantity of attention heads at the transformer layer or neurons at the intermediate layer. A specific quantity is determined based on the available resource state of the terminal device, so that in an inference phase, the terminal device can flexibly select, based on a hardware capability of the device, a network model with an appropriate width and an appropriate depth to perform inference.

In this embodiment of this application, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or

the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

That is, the first neural network model is obtained by performing knowledge distillation training on the initial network model in a width direction. Small models of all sizes in the first neural network model all have data processing performance and precision that are the same as or similar to those of the initial neural network model. Therefore, even if the second neural network model is selected as an inference model, the second neural network model can still maintain very high inference precision.

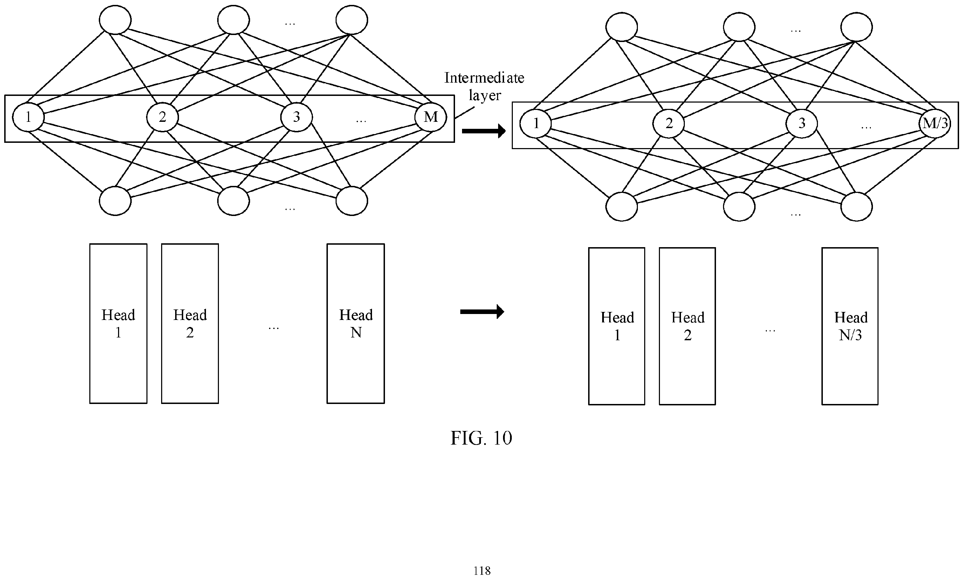

For example, refer to FIG. 10. FIG. 10 is a schematic diagram of width scaling of a model according to an embodiment of this application. As shown in FIG. 10, before the scaling, an intermediate layer of a transformer layer included by a first neural network model includes M neurons, and an MHA layer includes N attention heads. A second neural network model is obtained after the width scaling is performed on the first neural network model. The second neural network model includes a transformer layer corresponding to the transformer layer included by the first neural network model, an intermediate layer of the transformer layer includes M/3 neurons, and an MHA layer includes N/3 attention heads.

Optionally, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head; or the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

The capability of affecting the output result of the first neural network model may be understood as a degree of affecting a result when an output weight of a structure is 0.

Optionally, in an embodiment, importance of one attention head (or neuron) is determined by a change of a target function after the attention head (or neuron) is removed. A larger change indicates a more important attention head (or neuron), in other words, a greater capability of affecting the output result of the first neural network model. It should be noted that the capability of affecting the output result of the first neural network model may also be expressed as importance below. Specifically, the target function is f, and an output corresponding to the attention head (or neuron) is denoted as $h$. The change may be estimated by using the following Taylor first order expansion:

$$\left| f_h - f_{h=0} \right| = \left| f_h - \left( f_h + \frac{\partial f}{\partial h} h + R_{h=0} \right) \right| \approx \left| \frac{\partial f}{\partial h} h \right|$$

A manner of calculating importance of each attention head in the transformer layer may be as follows: A mask (a final weighting coefficient of each head) is given to each attention head. It is assumed that a mask corresponding to $h$ is m. In this case, a formula for calculating importance of the head may be as follows:

$$\left| \frac{\partial f}{\partial h} h \right| = \left| \frac{\partial f}{\partial m} \right|.$$

A manner of calculating importance of a neuron in the feed-forward layer may be as follows: It is assumed that a set of weights of all neurons connected to a neuron corresponding to $h$ is w = $\{w_1, w_2, w_3, ..., w_n\}$. In this case, a formula for calculating importance of the neuron may be the following formula:

$$\left| \frac{\partial f}{\partial h} h \right| \approx \left| \sum_{i=1}^{n} \frac{\partial f}{\partial w_i} w_i \right|.$$

In actual calculation, the importance of the attention head and the importance of the neuron (capabilities of affecting the output result of the first neural network model by the attention head and the neuron) may be quantized by using data in a development set or some data in a training set and based on an average value of the importance that is calculated according to the foregoing formulas.

In this embodiment of this application, the second transformer layer includes the first attention head, the M attention heads include the first attention head and the second attention head, the second transformer layer does not include the second attention head, and the capability of affecting the output result of the first neural network model by the first attention head is greater than the capability of affecting the output result of the first neural network model by the second attention head.

In this embodiment of this application, after an order of importance of the attention heads included by the transformer layer is obtained, an attention head with higher importance may be selected as an attention head in the transformer layer of the second neural network model. For example, in an embodiment, one transformer layer of the first neural network model includes the following attention heads:

head 1, head 2, head 3, head 4, head 5, head 6, head 7, head 8, head 9, head 10, head 11, and head 12.

After the heads are sorted based on importance, head 6, head 7, head 8, head 1, head 2, head 3, head 4, head 5, head 9, head 10, head 11 and head 12 are obtained. In other words, head 6 is most important, and head 12 is least important. In this case, when it is determined, based on the resource state, that the quantity of attention heads included by the corresponding transformer layer in the second neural network model is 4, four attention heads with higher importance, namely, head 6, head 7, head 8, and head 1, may be selected as attention heads included by the transformer layer.

The second intermediate layer includes the first neuron, the M neurons include the first neuron and the second neuron, the second intermediate layer does not include the second neuron, and the capability of affecting the output result of the first neural network model by the first neuron is greater than the capability of affecting the output result of the first neural network model by the second neuron.

In this embodiment of this application, after an order of importance of the neurons included by the intermediate layer is obtained, a neuron with higher importance may be selected as a neuron at the intermediate layer of the second neural network model.

In this embodiment of this application, an attention magnitude is determined, and the attention magnitude is used as a basis for attention head selection, so that data processing precision of a scaled model (the second neural network model) can be improved.

Optionally, in an embodiment, importance may be quantized based on a sum of absolute values of element values in a plurality of transformation matrices included by each attention head. Particularly, a sum of absolute values of element values in a plurality of transformation matrices included by the first attention head is greater than a sum of absolute values of element values in a plurality of transformation matrices included by the second attention head. That is, a larger sum of absolute values of element values in a plurality of transformation matrices included by an attention head indicates greater importance.

Optionally, the M attention heads included by the first transformer layer are arranged in the following manner: arranging the M attention heads based on capabilities of affecting the output result of the first neural network model by the M attention heads.

Optionally, after the second neural network model is obtained, to-be-processed language information may be obtained, and the to-be-processed language information is processed based on the second neural network model.

In this embodiment of this application, the terminal device may perform, but is not limited to, a processing process in each scenario described in the foregoing natural language processing on the to-be-processed language information. This is not limited herein.

It should be noted that the foregoing embodiments are described by using an example in which an execution body is the terminal device. When the execution body is the cloud-side device, the terminal device needs to send the available resource state to the cloud-side device. Correspondingly, the cloud-side device may perform the embodiment descriptions corresponding to the foregoing steps 601 and 602.

The embodiment of this application provides a data processing method, including: obtaining the first neural network model and the available resource state of the terminal device, where the first neural network model includes the first transformer layer, the first transformer layer includes the M attention heads and the first feed-forward layer, the first feed-forward layer includes the first intermediate layer (intermediate layer), the first intermediate layer includes the N neurons, and M and N are positive integers; determining the second neural network model based on the available resource state, where the second neural network model is obtained based on the first neural network model, and the second neural network model meets at least one of the following conditions: the second neural network model includes the second transformer layer corresponding to the first transformer layer, and the quantity of attention heads included by the second transformer layer is less than M; or the second neural network model includes the second intermediate layer corresponding to the first intermediate layer, and the quantity of neurons included by the second intermediate layer is less than N. In the foregoing manner, an appropriate model size may be determined based on the available resource state, and a part of the first neural network model is selected, based on the determined model size, as the second neural network model on which data processing is to be performed, thereby reducing a size of the model.

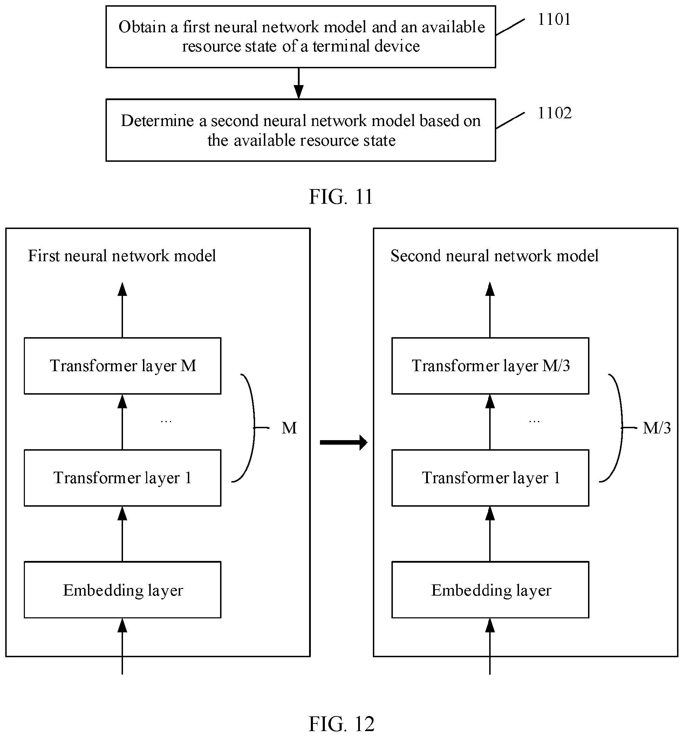

FIG. 11 is a schematic diagram of an embodiment of a data processing method according to an embodiment of this application. As shown in FIG. 11, the data processing method provided in this embodiment of this application includes the following steps.

1101: Obtain a first neural network model and an available resource state of a terminal device, where the first neural network model includes N transformer layers, and N is a positive integer.

In this embodiment of this application, a cloud-side device or the terminal device may obtain the first neural network model and the available resource state of the terminal device. The first neural network model includes the N transformer layers. Refer to FIG. 7. A quantity of transformer layers included by the first neural network model is N. For specific descriptions of the available resource state, refer to the descriptions in step 601 and the corresponding embodiment in the foregoing embodiments, and details are not described herein again.

1102: Determine a second neural network model based on the available resource state, where the second neural network model is obtained based on the first neural network model, and a quantity of transformer layers included by the second neural network model is less than N.

Similar to step 602 in the foregoing embodiment, in this embodiment of this application, after the available resource state of the terminal device and the first neural network model are obtained, depth size information of the second neural network model may be determined based on the available resource state. The depth size information indicates the quantity of transformer layers included by the second neural network model.

Optically, the depth size information of the second neural network model may be determined based on a third preset association relationship and the available resource state, where the third preset association relationship indicates a correspondence between the available resource state and the depth size information of the second neural network model. Specifically, the third preset association relationship may be a preset function, an input of the preset function is the available resource state, and an output of the preset function is the depth size information of the second neural network model; or the third preset association relationship is a preset table, and the preset table includes a plurality of available resource states and depth size information that is of the second neural network model and that corresponds to each available resource state.

In this embodiment of this application, the terminal device may obtain the available resource state. The available resource state may include at least one of the following: power consumption of the terminal device, a computing capability of the terminal device, or an available storage size of the terminal device. For example, when the terminal device simultaneously runs many applications that occupy memory and computing resources, the power consumption of the terminal device is high, and the computing capability of the terminal device is poor. In this case, the terminal device may determine to select a part of models from the first neural network model as models for data processing.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector. That is, in the first neural network model, the first transformer layer is a transformer layer directly connected to the first embedding layer, while in the second neural network model, the second transformer layer corresponding to the first transformer layer is a transformer layer directly connected to the second embedding layer.

Optionally, in an optional design of the second aspect, the first neural network model further includes a fifth transformer layer and a sixth transformer layer, where the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer. That is, in the first neural network model, the first transformer layer is a transformer layer connected after the fifth transformer layer and before the sixth transformer layer, while in the second neural network model, the second transformer layer corresponding to the first transformer layer is a transformer layer connected after the seventh transformer layer and before the eighth transformer layer, where the seventh transformer layer corresponds to the second transformer layer, and the sixth transformer layer corresponds to the first transformer layer.

Optionally, in an optional design of the second aspect, the output vector of the first transformer layer is used as an input vector of a next transformer layer, and the output vector of the second transformer layer is used as an output representation of the first neural network.

In this embodiment of this application, the N transformer layers include the first transformer layer, the second neural network model includes the second transformer layer corresponding to the first transformer layer, and the first transformer layer and the second transformer layer meet a preset condition.

The first transformer layer includes a first multi-head attention MHA layer, a first skip connection layer, a first feed-forward layer, and a first normalization layer, and the first feed-forward layer includes a first intermediate layer (intermediate layer). The second transformer layer includes a second MHA layer, a second skip connection layer, a second feed-forward layer, and a second normalization layer, and the second feed-forward layer includes a second intermediate layer. The preset condition includes at least one of the following:

the first skip connection layer is the same as the second skip connection layer;
the first normalization layer is the same as the second normalization layer;
each of a plurality of attention heads included by the second MHA layer is one of the first MHA layer included by the first transformer layer; or
each of a plurality of neurons included by the second intermediate layer is one of a plurality of neurons included by the first intermediate layer.

For example, refer to FIG. 12. FIG. 12 is a schematic diagram of depth scaling of a model according to an embodiment of this application. As shown in FIG. 12, before the scaling, a first neural network model includes M transformer layers (a transformer layer 1, ..., and a transformer layer M), and a second neural network model is obtained after the width scaling is performed on the first neural network model. The second neural network model includes M/3 transformer layers (a transformer layer 1, ..., and a transformer layer M/3). The transformer layer 1 in the first neural network and the transformer layer 1 in the second neural network may be the same, or may be different (a quantity of attention heads in the transformer layer 1 in the first neural network model is different from a quantity of attention heads in the transformer layer 1 of the second neural network model, or a quantity of neurons included by an intermediate layer in the transformer layer 1 in the first neural network model is different from a quantity of neurons included by an intermediate layer in the transformer layer 1 of the second neural network model).

Optionally, to-be-processed language information may be obtained, and the to-be-processed language information is processed based on the second neural network model. For specific descriptions, refer to the descriptions in the foregoing embodiments. Details are not described herein again.

The embodiment of this application provides a data processing method, including: obtaining the first neural network model and the available resource state of the terminal device, where the first neural network model includes the N transformer layers, and N is a positive integer; and determining the second neural network model based on the available resource state, where the second neural network model is obtained based on the first neural network model, and the quantity of transformer layers included by the second neural network model is less than N. In the foregoing manner, an appropriate model size may be determined based on the available resource state, and a part of the first neural network model is selected, based on the determined model size, as the second neural network model on which data processing is to be performed, thereby reducing a size of the model.

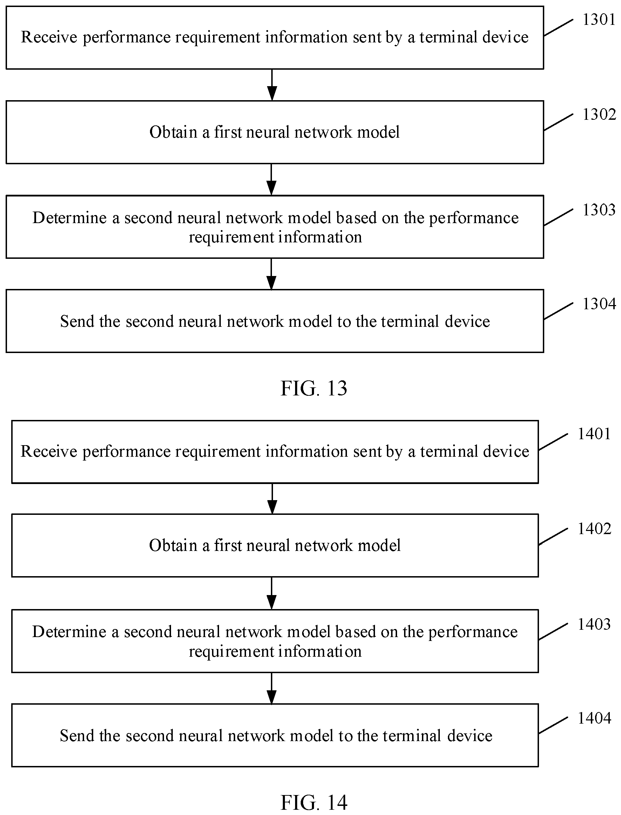

FIG. 13 is a schematic diagram of an embodiment of a data processing method according to an embodiment of this application. As shown in FIG. 13, the data processing method provided in this embodiment of this application includes the following steps.

1301: Receive performance requirement information sent by a terminal device.

In this embodiment of this application, the terminal device may send the performance requirement information to a cloud-side device. The performance requirement information may include at least one of the following: a precision requirement, a latency requirement, or a model compression ratio requirement.

In some scenarios, when the terminal device needs to obtain a model used for inference from the cloud-side device, the terminal device may send a model obtaining request to the cloud-side device. The model obtaining request may include the performance requirement information. Correspondingly, the cloud-side device may receive the performance requirement information sent by the terminal device, and determine, based on the performance requirement information, a second neural network model suitable for the terminal device. When a precision requirement is high, a size of the second neural network model may be large, to provide a model with high performance. When a latency requirement is high, the size of the second neural network model may be small, to provide a model that can be quickly deduced. When a model compression ratio (a ratio of a size of a model before scaling to a size of a model after scaling) requirement is high, the size of the second neural network model may be large, to provide a model with a high model compression ratio.

1302: Obtain a first neural network model, where the first neural network model includes a first transformer layer, the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers.

Optionally, the first neural network model is obtained by performing knowledge distillation training on an initial neural network model based on at least one first width size, where each of the at least one first width size indicates a quantity of attention heads included by a transformer layer, and a quantity of attention heads included by the second transformer layer is one of the at least one first width size; or the first neural network model is obtained by performing knowledge distillation training on an initial neural network model based on at least one second width size, where each of the at least one second width size indicates a quantity of neurons included by an intermediate layer, and a quantity of neurons included by the second transformer layer is one of the at least one second width size.

1303: Determine a second neural network model based on the performance requirement information, where the second neural network model is obtained based on the first neural network model, and the second neural network model meets at least one of the following conditions:

the second neural network model includes a second transformer layer corresponding to the first transformer layer, and a quantity of attention heads included by the second transformer layer is less than M; or
the second neural network model includes a second intermediate layer corresponding to the first intermediate layer, and a quantity of neurons included by the second intermediate layer is less than N.

For specific descriptions of step 1303, refer to the descriptions in the foregoing embodiment. Details are not described herein again.

Optionally, each attention head included by the second transformer layer is one of the M attention heads included by the first transformer layer; or each neuron included by the second intermediate layer is one of the M neurons included by the first intermediate layer.

1304: Send the second neural network model to the terminal device.

In this embodiment of this application, after determining the second neural network model, the cloud-side device may send the determined second neural network model to the terminal device, and the terminal device may perform inference based on the received second neural network model. It should be noted that the terminal device may further perform further model scaling processing on the received second neural network model, for example, may perform the data processing methods provided in embodiments corresponding to FIG. 6 and FIG. 11. This is not limited herein.

Optionally, the method further includes:

sending a preset association relationship to the terminal device, where the preset association relationship indicates a correspondence between an available resource state and a third width size of a third neural network model or a correspondence between an available resource state and a fourth width size of the third neural network model, the third neural network model is obtained based on the second neural network model, the third width size indicates a quantity of attention heads included by a transformer layer, and the fourth width size indicates a quantity of neurons included by an intermediate layer.

The preset association relationship is a preset function; and an input of the preset function is the available resource state, and an output of the preset function is the third width size of the third neural network model; or an input of the preset function is the available resource state, and an output of the preset function is the fourth width size of the third neural network model; or

the preset association relationship is a preset table; and the preset table includes a plurality of available resource states and a third width size that is of the third neural network model and that corresponds to each available resource state; or the preset table includes a plurality of available resource states and a fourth width size that is of the third neural network model and that corresponds to each available resource state.

In this embodiment of this application, the cloud-side device may further send, to the terminal device, the preset association relationship used to further scale the width or the depth of the second neural network model. The preset association relationship may be the preset association relationship that is used to determine the width size or the depth size of the second neural network model and that is described in FIG. 6 and FIG. 11 in the foregoing embodiments. For details about how the terminal device uses the received preset association relationship, refer to the descriptions in the foregoing embodiment. Details are not described herein again.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the second neural network model is a part of the first neural network model.

Optionally, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head.

Optionally, a sum of absolute values of element values in a plurality of transformation matrices included by the first attention head is greater than a sum of absolute values of element values in a plurality of transformation matrices included by the second attention head.

Optionally, the M attention heads included by the first transformer layer are arranged in the following manner: arranging the M attention heads based on capabilities of affecting the output result of the first neural network model by the M attention heads.

Optionally, a capability of affecting the output result of the first neural network model by each attention head included by the second transformer layer is greater than the capability of affecting the output result of the first neural network model by the second attention head.

Optionally, the method further includes:

determining first width size information of the second neural network model based on the performance requirement information, where the first width size information includes the quantity of attention heads included by the second transformer layer.

Optionally, the determining size information of the second neural network model based on the performance requirement information includes:

determining the first width size information of the second neural network model based on a first preset association relationship and the performance requirement information, where the first preset association relationship indicates a correspondence between the performance requirement information and the first width size information of the second neural network model.

The first preset association relationship is a preset function, an input of the preset function is the performance requirement information, and an output of the preset function is the first width size information of the second neural network model; or

the first preset association relationship is a preset table, and the preset table includes a plurality of pieces of performance requirement information and first width size information that is of the second neural network model and that corresponds to each piece of performance requirement information.

Optionally, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, each neuron included by the second intermediate layer is one of the M neurons included by the first intermediate layer.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the first transformer layer further includes a first multi-head attention MHA layer, and the second transformer layer further includes a second MHA layer. A ratio of a quantity of attention heads included by the second MHA layer to a quantity of attention heads included by the first MHA layer is a first ratio, a ratio of the quantity of neurons included by the second intermediate layer to a quantity of neurons included by the first intermediate layer is a second ratio, and the first ratio is equal to the second ratio.

Optionally, the second neural network model is a part of the first neural network model.

Optionally, the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

Optionally, the M neurons included by the first intermediate layer are arranged in the following manner: arranging the M neurons based on capabilities of affecting the output result of the first neural network model by the M neurons.

Optionally, a capability of affecting the output result of the first neural network model by each neuron included by the second intermediate layer is greater than the capability of affecting the output result of the first neural network model by the second neuron.

Optionally, the method further includes:

determining second width size information of the second neural network model based on the performance requirement information, where the second width size information includes the quantity of neurons included by the second intermediate layer.

Optionally, the determining second width size information of the second neural network model based on the performance requirement information includes:

determining the second width size information of the second neural network model based on a second preset association relationship and the performance requirement information, where the second preset association relationship indicates a correspondence between the performance requirement information and the second width size information of the second neural network model.

The first preset association relationship is a preset function, an input of the preset function is the performance requirement information, and an output of the preset function is the second width size information of the second neural network model; or

the first preset association relationship is a preset table, and the preset table includes a plurality of pieces of performance requirement information and second width size information that is of the second neural network model and that corresponds to each piece of performance requirement information.

Optionally, the performance requirement information includes at least one of the following:
a precision requirement, a latency requirement, or a model compression ratio requirement.

Optionally, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

The embodiment of this application provides a data processing method, including: receiving the performance requirement information sent by the terminal device; obtaining the first neural network model, where the first neural network model includes the first transformer layer, the first neural network model includes the first transformer layer, the first transformer layer includes the M attention heads and the first feed-forward layer, the first feed-forward layer includes the first intermediate layer (intermediate layer), the first intermediate layer includes the N neurons, and M and N are positive integers; determining the second neural network model based on the performance requirement information, where the second neural network model is obtained based on the first neural network model, and the second neural network model meets at least one of the following conditions: the second neural network model includes the second transformer layer corresponding to the first transformer layer, and the quantity of attention heads included by the second transformer layer is less than M; or the second neural network model includes the second intermediate layer corresponding to the first intermediate layer, and the quantity of neurons included by the second intermediate layer is less than N; and sending the second neural network model to the terminal device. In the foregoing manner, the cloud-side device may determine, based on the performance requirement information of the terminal device, a second neural network model suitable for a requirement of the terminal device.

FIG. 14 is a schematic diagram of an embodiment of a data processing method according to an embodiment of this application. As shown in FIG. 14, the data processing method provided in this embodiment of this application includes the following steps.

1401: Receive performance requirement information sent by a terminal device.

For specific descriptions of step 1401, refer to the specific descriptions of step 1301 in the foregoing embodiment. Details are not described herein again.

1402: Obtain a first neural network model, where the first neural network model includes N transformer layers, and N is a positive integer.

For specific descriptions of step 1402, refer to the specific descriptions of step 1302 in the foregoing embodiment. Details are not described herein again.

1403: Determine a second neural network model based on the performance requirement information, where a quantity of transformer layers included by the second neural network model is less than N, the first neural network model is obtained by performing knowledge distillation training on an initial neural network model based on at least one depth size, where each of the at least one depth size indicates a quantity of transformer layers, and a quantity of second transformer layers is one of the at least one depth size.

Different from step 1303 in the foregoing embodiment, the quantity of transformer layers included by the second neural network model in this embodiment is less than a quantity of transformer layers included by the first neural network model. Specifically, for how to determine the second neural network model, refer to the descriptions of the embodiment corresponding to FIG. 11. Details are not described herein again.

1404: Send the second neural network model to the terminal device.

For specific descriptions of step 1404, referto the descriptions of step 1304 in the foregoing embodiment. Details are not described herein again.

Optionally, the N transformer layers include a first transformer layer, the second neural network model includes a second transformer layer corresponding to the first transformer layer, and the first transformer layer and the second transformer layer meet a preset condition.

The first transformer layer includes a first multi-head attention MHA layer, a first skip connection layer, a first feed-forward layer, and a first normalization layer, and the first feed-forward layer includes a first intermediate layer (intermediate layer). The second transformer layer includes a second MHA layer, a second skip connection layer, a second feed-forward layer, and a second normalization layer, and the second feed-forward layer includes a second intermediate layer. The preset condition includes at least one of the following:

the first skip connection layer is the same as the second skip connection layer;
the first normalization layer is the same as the second normalization layer;
each of a plurality of attention heads included by the second MHA layer is one of the first MHA layer included by the first transformer layer; or
each of a plurality of neurons included by the second intermediate layer is one of a plurality of neurons included by the first intermediate layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, the output vector of the first transformer layer is used as an input vector of a next transformer layer, and the output vector of the second transformer layer is used as an output representation of the first neural network.

Optionally, the method further includes:
determining depth size information of the second neural network model based on the performance requirement information, where the depth size information includes the quantity of transformer layers included by the second neural network model.

Optionally, the determining depth size information of the second neural network model based on the performance requirement information includes:
determining the depth size information of the second neural network model based on a third preset association relationship and the performance requirement information, where the third preset association relationship indicates a correspondence between the performance requirement information and the depth size information of the second neural network model.

Optionally, the third preset association relationship is a preset function, an input of the preset function is the available resource state, and an output of the preset function is the depth size information of the second neural network model; or
the third preset association relationship is a preset table, and the preset table includes a plurality of pieces of performance requirement information and depth size information that is of the second neural network model and that corresponds to each piece of performance requirement information.

The embodiment of this application provides a data processing method, including: receiving the performance requirement information sent by the terminal device; obtaining the first neural network model, where the first neural network model includes the N transformer layers, and N is a positive integer; determining the second neural network model based on the performance requirement information, where the quantity of transformer layers included by the second neural network model is less than N, the first neural network model is obtained by performing knowledge distillation training on the initial neural network model based on the at least one depth size, where each of the at least one depth size indicates the quantity of transformer layers, and the quantity of second transformer layers is one of the at least one depth size; and sending the second neural network model to the terminal device. In the foregoing manner, a cloud-side device may determine, based on the performance requirement information of the terminal device, a second neural network model suitable for a requirement of the terminal device.

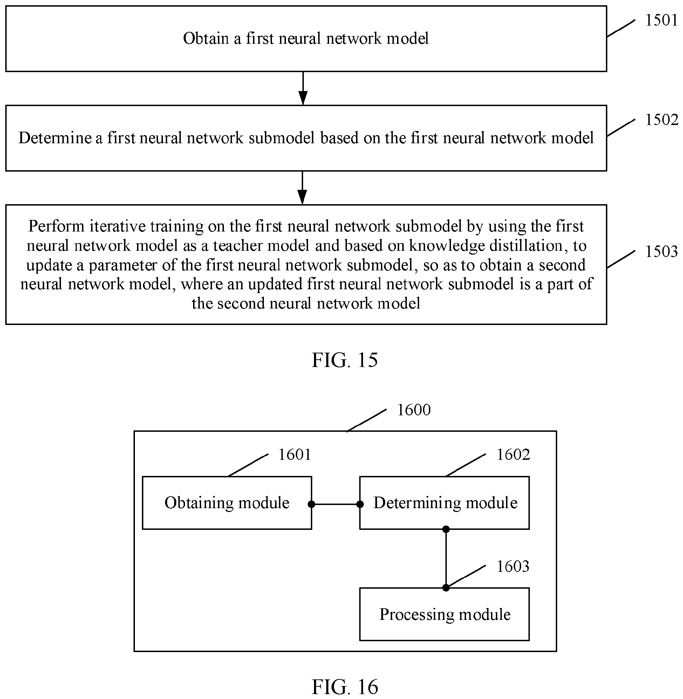

The following describes a data processing method according to an embodiment of this application in terms of a training process. FIG. 15 is a schematic diagram of an embodiment of a data processing method according to an embodiment of this application. As shown in FIG. 15, the data processing method provided in this embodiment of this application includes the following steps.

1501: Obtain a first neural network model, where the first neural network model includes a plurality of first transformer layers, each of the plurality of first transformer layers includes a plurality of attention heads and a first feed-forward layer, the first feed-forward layer includes a first intermediate layer (intermediate layer), and the first intermediate layer includes a plurality of neurons.

In this embodiment of this application, a training device may obtain the first neural network model, where the first neural network model includes the plurality of first transformer layers, each of the plurality of first transformer layers includes the plurality of attention heads and the first feed-forward layer, the first feed-forward layer includes the first intermediate layer (intermediate layer), and the first intermediate layer includes the plurality of neurons.

In this embodiment of this application, the first neural network model may be a trained neural network. In particular, the first neural network model may be a neural network obtained by sorting importance of attention heads included by the transformer layer or importance of neurons included by the intermediate layer.

1502: Determine a first neural network submodel based on the first neural network model, where the first neural network submodel is a part of the first neural network model, the first neural network submodel includes a second transformer layer corresponding to each first transformer layer, each second transformer layer includes a second intermediate layer, a quantity of attention heads included by each second transformer layer is less than a quantity of attention heads included by a corresponding first transformer layer, and a quantity of neurons included by each second intermediate layer is less than a quantity of neurons included by a corresponding first intermediate layer.

1503: Perform iterative training on the first neural network submodel by using the first neural network model as a teacher model and based on knowledge distillation, to update a parameter value of the first neural network submodel, so as to obtain a second neural network model, where an updated first neural network submodel is a part of the second neural network model.

In this embodiment of this application, the training device may process language information based on the first neural network model to obtain a first output label of the first neural network model and a first output vector of each first transformer layer, where the language information corresponds to a target label;

perform feedback processing on the first neural network model by using a first target function, to obtain a first gradient, where the first target function is related to a distance between the first output label and the target label;

process the language information based on the first neural network submodel to obtain a second output label and a second output vector of each of a plurality of second transformer layers, where each second output vector corresponds to one first output vector;

perform feedback processing on the first neural network submodel by using a second target function, to obtain a second gradient, where the second target function is related to a distance between the second output label and the target label, a distance between the second output label and the first output label, and a distance between each first output vector and a corresponding second output vector; and

update the parameter of the first neural network submodel based on a target gradient, to obtain the second neural network model, where the target gradient is related to the first gradient and the second gradient.

A training objective of a network with a scalable width is to perform inference on a same network at different widths. If all widths are traversed during training, training costs are excessively high. Therefore, in each iteration, only a part of the widths can be randomly sampled for training.

In the training of the network with a scalable width, a classification task is used as an example, a basic idea of distillation is to first train a large model, and then migrate knowledge learned by the large model to a small model through fitting of logits and intermediate layer feature representations. During specific implementation, for a network with a maximum width, a target function trained by the network is a target function of a downstream task. For the classification task, a difference between a label $y_{max}$ predicted by a model and a real label y is usually used as a target function $L = \ell_1(y_{max}, y)$ (a feasible distance calculation method may be selected for the difference, for example, a Cross Entropy function). A target function of a network with a small width not only includes a target function $\ell_1$ of a downstream task, but also includes two target functions $\ell_2(y_{max}, y')$ and $\ell_3(h_{max}, h')$ that enable logits y' and hidden states h' of a subnetwork to approach logits $y_{max}$ and hidden states $h_{max}$ of the network with a maximum width. Any feasible distance calculation method may be selected for the difference. For example, a mean square error (MSE) may be selected for $\ell_2$, and the cross entropy function may be selected for $\ell_3$. For a specific procedure, refer to an example of the following algorithm.

Input: width scaling range of a training set r = $[r_{min}, r_{max}]$ (for example, r = [1,12]), and a quantity n of widths sampled each time (for example, n = 4)

Initialization: first neural network model

1. FOR *iter* = 1,2, ... $T_{train}$ DO
2. Obtain samples x and labels y in a current mini-batch.
3. Randomly sample (n - 2) widths $a_1, a_2, ... a_{n-2}$.
4. Clear a gradient in an optimizer.
5. FOR *width* in *sorted*($[r_{min}, r_{max}, a_1, a_2, ... a_{n-2}]$, *decrease = True*) DO
6. IF *width* == $r_{max}$ DO
7. Perform feed-forward once to obtain the hidden states $h_{max}$, the logits $y_{max}$, and the target function $L = l_1(y_{max}, y)$ of the network.
8. Obtain a gradient obtained through feedback performed once based on *L* and accumulate the gradient in G.
9. ELSE
10. Perform feed-forward once on a subnetwork whose width is *width* to obtain hidden states *h'* and logits y' of the network.
11. Calculate a distillation target function $L' = l_1(y', y) + {}_2(y_{max}, y') + l_3 hmax, h'$ based on the hidden states and the logits.
12. Obtain a gradient obtained through feedback performed once based on L' and accumulate the gradient in G.
13. END IF
14. END FOR
15. Update a parameter by using an accumulated gradient G.
16. END FOR

It should be noted that the foregoing algorithm is merely an example, and does not constitute a limitation on this application.

Optionally, the training device may further determine a second neural network submodel based on the second neural network model. The second neural network submodel is a part of the second neural network model, and a quantity of transformer layers included by the second neural network submodel is less than M. The training device may determine a third neural network submodel based on the second neural network model. The third neural network submodel is a part of the second neural network model, and a quantity of transformer layers included by the third neural network submodel is the same as a quantity of transformer layers included by the second neural network submodel. A quantity of attention heads included by each of a plurality of transformer layers included by the third neural network submodel is the same as a quantity of attention heads included by a corresponding transformer layer in the second neural network submodel, and a quantity of neurons included by each of a plurality of intermediate layers included by the third neural network submodel is the same as a quantity of neurons included by a corresponding intermediate layer in the second neural network submodel. Iterative training is performed on the second neural network submodel by using the third neural network submodel as a teacher model and based on knowledge distillation, to update a parameter value of the second neural network submodel, so as to obtain a third neural network model. An updated second neural network submodel is a part of the third neural network model.

In this embodiment of this application, a training objective of a network with a scalable depth and a scalable width is to perform inference on a same network at different depths and different widths. If all widths and all depths are traversed during training, training costs are excessively high. Therefore, in each iteration, only a part of the depths and a part of the widths may be randomly sampled for training.

In the training of the network with a scalable depth and a scalable width, a knowledge distillation method may be used to migrate knowledge learned by a model with a maximum depth to a network with a small depth. In this process, to prevent previously learned knowledge in a width direction from being forgotten due to scaling in a depth direction, in a training process of depth scaling, some different widths may be randomly sampled in each iteration for training. Feed-forward calculation is performed on each sampled width to obtain logits y' and intermediate layer feature representations *h'* of the network, and a distillation target function $L' = l_1(y', y) + l_2(y_{max}, y') + l_3(h_{max}, h')$ is calculated based on logits $y_{max}$ and intermediate layer feature representations $h_{max}$ of a subnetwork with a width same as a width of a current subnetwork and a maximum depth in H and Y. Similar to the width scalable training part, any feasible distance function may be selected for difference functions $\ell_1, \ell_2, \ell_3$ herein. For a specific procedure, refer to an example of the following algorithm.

Input: training set, width scaling range r = $[r_{min}, r_{max}]$ (for example, $r \in [1,12]$), depth scaling range s = $[s_{min}, s_{max}]$ (for example, s = [6,12], a quantity n of widths sampled each time (for example, n = 4), and a quantity m of depths sampled each time (for example, m = 4)

Initialization: second neural network model

```
1. FOR iter = 1,2, ... T_train DO
2. Obtain samples x and labels y in a current mini-batch.
3. Sample (n - 2) widths a_1,a_2, ... a_{n-2} and (m - 2) depths d_1,d_2, ... d_{m-2}.
4. Clear a gradient in an optimizer.
5. FOR all width in [r_min,r_max] DO
6. Obtain hidden states h_max obtained through feed-forward performed when depth = s_max and store the hidden
states in H, and store logits y_max in Y.
7. END FOR
8. FOR depth in [s_min,s_max,d_1,d_2, ... d_{m-2}]
9. FOR width in [r_min,r_max,a_1,a_2, ... a_{n-2}]
10. Perform feed-forward once to obtain hidden states h' and logits y' of the network.
11. Calculate the distillation objective function L' = l_1(y',y) + l_2(y_max,y') + l_3(h_max,h') based on the hidden states,
logits, and a subnetwork with a width same as the width of the current subnetwork in H and Y.
12. Obtain a gradient obtained through feedback performed once based on L' and accumulate the gradient in G.
13. END FOR
14. END FOR
15. Update a parameter by using an accumulated gradient G.
16. END FOR
```

It should be noted that the training in step 8 and step 9 may be exchanged.

It should be noted that the foregoing algorithm is merely an example, and does not constitute a limitation on this application.

Based on embodiments corresponding to FIG. 1 to FIG. 15, to better implement the foregoing solutions in embodiments of this application, the following further provides related devices configured to implement the foregoing solutions. Specifically, refer to FIG. 16. FIG. 16 is a schematic diagram of a structure of a data processing device 1600 according to an embodiment of this application. The data processing device 1600 may be a terminal device or a server. The data processing device 1600 includes:

an obtaining module 1601, configured to obtain a first neural network model and an available resource state of a terminal device, where the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers; and a determining module 1602, configured to determine a second neural network model based on the available resource state, where the second neural network model is obtained based on the first neural network model, and the second neural network model meets at least one of the following conditions:

the second neural network model includes a second transformer layer corresponding to the first transformer layer, and a quantity of attention heads included by the second transformer layer is less than M; or the second neural network model includes a second intermediate layer corresponding to the first intermediate layer, and a quantity of neurons included by the second intermediate layer is less than N.

Optionally, the obtaining module 1601 is further configured to obtain to-be-processed language information.

The device further includes a processing module 1603, configured to process the to-be-processed language information based on the second neural network model.

Optionally, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or

the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

Optionally, each attention head included by the second transformer layer is one of the M attention heads included by the first transformer layer; or

each neuron included by the second intermediate layer is one of the M neurons included by the first intermediate layer.

Optionally, a ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head; or
the second intermediate layer includes a first neuron, the M neurons include the first neuron and a second neuron, the second intermediate layer does not include the second neuron, and a capability of affecting the output result of the first neural network model by the first neuron is greater than a capability of affecting the output result of the first neural network model by the second neuron.

Optionally, the determining module is further configured to:
determine first width size information or second width size information of the second neural network model based on the available resource state, where the first width size information includes the quantity of attention heads included by the second transformer layer, and the second width size information includes the quantity of neurons included by the second intermediate layer.

Optionally, the determining module is specifically configured to:
determine the first width size information or the second width size information of the second neural network model based on a preset association relationship and the available resource state, where the preset association relationship indicates a correspondence between the available resource state and the first width size information of the second neural network model or a correspondence between the available resource state and the second width size information of the second neural network model.

The preset association relationship is a preset function; and an input of the preset function is the available resource state, and an output of the preset function is the first width size information of the second neural network model; or an input of the preset function is the available resource state, and an output of the preset function is the second width size information of the second neural network model; or
the preset association relationship is a preset table; and the preset table includes a plurality of available resource states and first width size information that is of the second neural network model and that corresponds to each available resource state; or the preset table includes a plurality of available resource states and second width size information that is of the second neural network model and that corresponds to each available resource state.

Optionally, the available resource state includes at least one of the following:
a power consumption of the terminal device, a computing capability of the terminal device, or an available storage size of the terminal device.

Optionally, each attention head included by the second transformer layer is one of the M attention heads included by the first transformer layer.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the second neural network model is a part of the first neural network model.

Optionally, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, a sum of absolute values of element values in a plurality of transformation matrices included by the first attention head is greater than a sum of absolute values of element values in a plurality of transformation matrices included by the second attention head.

Optionally, the M attention heads included by the first transformer layer are arranged in the following manner:
arranging the M attention heads based on capabilities of affecting the output result of the first neural network model by the M attention heads.

Optionally, the device further includes a receiving module, configured to:
receive the first preset association relationship sent by a cloud-side device.

Optionally, the device further includes a sending module, configured to:
send performance requirement information of the terminal device to the cloud-side device.

The receiving module is further configured to:
receive the first neural network model that is determined based on the performance requirement information and that is sent by the cloud-side device.

Optionally, the performance requirement information includes at least one of the following:

a precision requirement, a latency requirement, or a model compression ratio requirement.

Optionally, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the second neural network model is a part of the first neural network model.

Optionally, the M neurons included by the first intermediate layer are arranged in the following manner: arranging the M neurons based on capabilities of affecting the output result of the first neural network model by the M neurons.

Optionally, the receiving module is further configured to:
receive the second preset association relationship sent by a cloud-side device.

Optionally, the sending module is further configured to:
send performance requirement information of the terminal device to the cloud-side device.

The receiving module is further configured to:
receive the first neural network model that is determined based on the performance requirement information and that is sent by the cloud-side device.

Optionally, the performance requirement information includes at least one of the following:
a precision requirement, a latency requirement, or a model compression ratio requirement.

Optionally, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

The data processing device provided in this embodiment of this application includes: the obtaining module 1601, configured to obtain the first neural network model and the available resource state of the terminal device, where the first neural network model includes the first transformer layer, the first transformer layer includes the M attention heads and the first feed-forward layer, the first feed-forward layer includes the first intermediate layer (intermediate layer), the first intermediate layer includes the N neurons, and M and N are positive integers; and the determining module 1602, configured to determine the second neural network model based on the available resource state, where the second neural network model is obtained based on the first neural network model, and the second neural network model meets at least one of the following conditions: the second neural network model includes the second transformer layer corresponding to the first transformer layer, and the quantity of attention heads included by the second transformer layer is less than M; or the second neural network model includes the second intermediate layer corresponding to the first intermediate layer, and the quantity of neurons included by the second intermediate layer is less than N. The obtaining module 1601 is further configured to obtain the to-be-processed language information. The processing module 1603 is configured to process the to-be-processed language information based on the second neural network model. In the foregoing manner, an appropriate model size may be determined based on the available resource state, and a part of the first neural network model is selected, based on the determined model size, as the second neural network model on which data processing is to be performed, thereby reducing a size of the model.

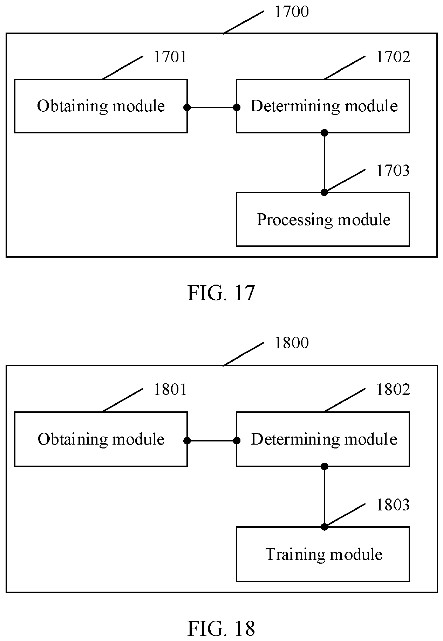

FIG. 17 is a schematic diagram of a structure of a data processing device 1700 according to an embodiment of this application. The data processing device 1700 may be a terminal device or a server. The data processing device 1700 includes:

an obtaining module 1701, configured to obtain a first neural network model and an available resource state of a terminal device, where the first neural network model includes N transformer layers, and N is a positive integer;

a determining module 1702, configured to determine a second neural network model based on the available resource state, where the second neural network model is obtained based on the first neural network model, and a quantity of transformer layers included by the second neural network model is less than N, where

the obtaining module 1701 is further configured to obtain to-be-processed language information; and

a processing module 1703, configured to process the to-be-processed language information based on the second neural network model.

Optionally, the first neural network model is obtained by performing knowledge distillation training on an initial neural network model based on at least one depth size, where each of the at least one depth size indicates a quantity of transformer layers, and a quantity of second transformer layers is one of the at least one depth size.

Optionally, the N transformer layers include a first transformer layer, the second neural network model includes a second transformer layer corresponding to the first transformer layer, and the first transformer layer and the second transformer layer meet a preset condition.

The first transformer layer includes a first multi-head attention MHA layer, a first skip connection layer, a first feed-forward layer, and a first normalization layer, and the first feed-forward layer includes a first intermediate layer (intermediate layer). The second transformer layer includes a second MHA layer, a second skip connection layer, a second feed-forward layer, and a second normalization layer, and the second feed-forward layer includes a second intermediate layer. The preset condition includes at least one of the following:

the first skip connection layer is the same as the second skip connection layer;
the first normalization layer is the same as the second normalization layer;
each of a plurality of attention heads included by the second MHA layer is one of the first MHA layer included by the first transformer layer; or
each of a plurality of neurons included by the second intermediate layer is one of a plurality of neurons included by the first intermediate layer.

Optionally, the determining module is further configured to:
determine depth size information of the second neural network model based on the available resource state, where the depth size information includes the quantity of transformer layers included by the second neural network model.

Optionally, the available resource state includes at least one of the following:
a power consumption of the terminal device, a computing capability of the terminal device, or an available storage size of the terminal device.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, the output vector of the first transformer layer is used as an input vector of a next transformer layer, and the output vector of the second transformer layer is used as an output representation of the first neural network.

Optionally, the determining module is specifically configured to:
determine the depth size information of the second neural network model based on a third preset association relationship and the available resource state, where the third preset association relationship indicates a correspondence between the available resource state and the depth size information of the second neural network model.

Optionally, the third preset association relationship is a preset function, an input of the preset function is the available resource state, and an output of the preset function is the depth size information of the second neural network model; or
the third preset association relationship is a preset table, and the preset table includes a plurality of available resource states and depth size information that is of the second neural network model and that corresponds to each available resource state.

Optionally, the available resource state includes at least one of the following:
the power consumption of the terminal device, the computing capability of the terminal device, or the available storage size of the terminal device.

Optionally, the device further includes a receiving module, configured to:
receive the third preset association relationship sent by a cloud-side device.

Optionally, the device further includes a sending module, configured to:
send performance requirement information of the terminal device to the cloud-side device.

The receiving module is further configured to receive the first neural network model that is determined based on the performance requirement information and that is sent by the cloud-side device.

Optionally, the performance requirement information includes at least one of the following:
a precision requirement, a latency requirement, or a model compression ratio requirement.

This application provides a data processing device, including: the obtaining module 1701, configured to obtain the first neural network model and the available resource state of the terminal device, where the first neural network model includes the N transformer layers, and N is a positive integer; and the determining module 1702, configured to determine the second neural network model based on the available resource state, where the second neural network model is obtained based on the first neural network model, and the quantity of transformer layers included by the second neural network model is less than N. In the foregoing manner, an appropriate model size may be determined based on the available resource state, and a part of the first neural network model is selected, based on the determined model size, as the second neural network model on which data processing is to be performed, thereby reducing a size of the model.

FIG. 18 is a schematic diagram of a structure of a data processing device 1800 according to an embodiment of this application. The data processing device 1800 may be a server. The data processing device 1800 includes:

an obtaining module 1801, configured to obtain a first neural network model, where the first neural network model includes a plurality of first transformer layers, each of the plurality of first transformer layers includes a plurality of attention heads and a first feed-forward layer, the first feed-forward layer includes a first intermediate layer (intermediate layer), and the first intermediate layer includes a plurality of neurons;
a determining module 1802, configured to determine a first neural network submodel based on the first neural network model, where the first neural network submodel is a part of the first neural network model, the first neural network submodel includes a second transformer layer corresponding to each first transformer layer, each second transformer layer includes a second intermediate layer, a quantity of attention heads included by each second transformer layer is less than a quantity of attention heads included by a corresponding first transformer layer, and a quantity of neurons included by each second intermediate layer is less than a quantity of neurons included by a corresponding first intermediate layer; and
a training module 1803, configured to perform iterative training on the first neural network submodel by using the first neural network model as a teacher model and based on knowledge distillation, to update a parameter value of the first neural network submodel, so as to obtain a second neural network model, where an updated first neural network submodel is a part of the second neural network model.

Optionally, a ratio of the quantity of neurons included by each second intermediate layer to the quantity of neurons included by the corresponding first intermediate layer is a first ratio, a ratio of the quantity of attention heads included by each second transformer layer to the quantity of attention heads included by the corresponding first transformer layer is a second ratio, and the first ratio is equal to the second ratio.

Optionally, the device further includes: performing network reconstruction on each first transformer layer based on a capability of affecting an output result of the first neural network model by each attention head included by each first transformer layer.

Optionally, the device further includes: performing network reconstruction on each first intermediate layer based on a capability of affecting an output result of the first neural network model by each neuron included by each first intermediate layer.

Optionally, a first target transformer layer includes a first attention head, and the first target transformer layer is one of a plurality of second transformer layers included by the first neural network submodel. A first transformer layer corresponding to the first target transformer layer includes the first attention head and a second attention head, and the first target transformer layer does not include the second attention head. A capability of affecting the output result of the first neural network model by the first attention head is greater than a capability of affecting the output result of the first neural network model by the second attention head.

Optionally, a sum of absolute values of element values in a plurality of transformation matrices included by the first attention head is greater than a sum of absolute values of element values in a plurality of transformation matrices included by the second attention head.

Optionally, a second target intermediate layer includes a first neuron, and the second target intermediate layer is one of a plurality of second intermediate layers included by the first neural network submodel. A first intermediate layer corresponding to the second target intermediate layer includes the first neuron and a second neuron, and the second target intermediate layer does not include the second neuron. A capability of affecting the output result of the first neural network model by the first neuron is greater than a capability of affecting the output result of the first neural network model by the second neuron.

Optionally, the training module is specifically configured to:

process language information based on the first neural network model to obtain a first output label of the first neural network model and a first output vector of each first transformer layer, where the language information corresponds to a target label;

perform feedback processing on the first neural network model by using a first target function, to obtain a first gradient, where the first target function is related to a distance between the first output label and the target label;

process the language information based on the first neural network submodel to obtain a second output label and a second output vector of each of the plurality of second transformer layers, where each second output vector corresponds to one first output vector;

perform feedback processing on the first neural network submodel by using a second target function, to obtain a second gradient, where the second target function is related to a distance between the second output label and the target label, a distance between the second output label and the first output label, and a distance between each first output vector and a corresponding second output vector; and

update the parameter of the first neural network submodel based on a target gradient, to obtain the second neural network model, where the target gradient is related to the first gradient and the second gradient.

Optionally, the determining module is further configured to:

determine a second neural network submodel based on the second neural network model, where the second neural network submodel is a part of the second neural network model, and a quantity of transformer layers included by the second neural network submodel is less than M;

determine a third neural network submodel based on the second neural network model, where the third neural network submodel is a part of the second neural network model, a quantity of transformer layers included by the third neural network submodel is the same as a quantity of transformer layers included by the second neural network model, a quantity of attention heads included by each of a plurality of transformer layers included by the third neural network submodel is the same as a quantity of attention heads included by a corresponding transformer layer in the second neural network submodel, and a quantity of neurons included by each of a plurality of intermediate layers included by the third neural network submodel is the same as a quantity of neurons included by a corresponding intermediate layer in the second neural network submodel; and

perform iterative training on the second neural network submodel by using the third neural network submodel as a teacher model and based on knowledge distillation, to update a parameter value of the second neural network submodel, so as to obtain a third neural network model, where an updated second neural network submodel is a part of the third neural network model.

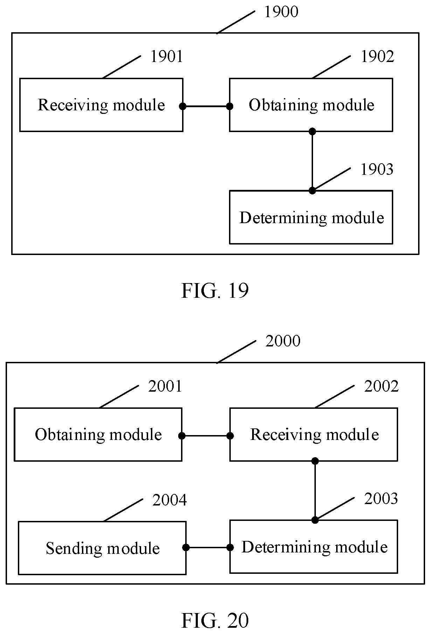

FIG. 19 is a schematic diagram of a structure of a data processing device 1900 according to an embodiment of this application. The data processing device 1900 may be a server. The data processing device 1900 includes:

a receiving module 1901, configured to receive performance requirement information sent by a terminal device;

an obtaining module 1902, configured to obtain a first neural network model, where the first neural network model includes a first transformer layer, the first neural network model includes a first transformer layer, the first transformer layer includes M attention heads and a first feed-forward layer, the first feed-forward layer includes a first intermediate layer (intermediate layer), the first intermediate layer includes N neurons, and M and N are positive integers;

a determining module 1903, configured to determine a second neural network model based on the performance requirement information, where the second neural network model is obtained based on the first neural network model, and the second neural network model meets at least one of the following conditions:

the second neural network model includes a second transformer layer corresponding to the first transformer layer, and a quantity of attention heads included by the second transformer layer is less than M; or

the second neural network model includes a second intermediate layer corresponding to the first intermediate layer, and a quantity of neurons included by the second intermediate layer is less than N; and

a sending module, configured to send the second neural network model to the terminal device.

Optionally, the performance requirement information includes at least one of the following:
a precision requirement, a latency requirement, or a model compression ratio requirement.

Optionally, the first neural network model is obtained by performing knowledge distillation training on an initial neural network model based on at least one first width size, where each of the at least one first width size indicates a quantity of attention heads included by a transformer layer, and the quantity of attention heads included by the second transformer layer is one of the at least one first width size; or the first neural network model is obtained by performing knowledge distillation training on an initial neural network model based on at least one second width size, where each of the at least one second width size indicates a quantity of neurons included by an intermediate layer, and the quantity of neurons included by the second transformer layer is one of the at least one second width size.

Optionally, each attention head included by the second transformer layer is one of the M attention heads included by the first transformer layer; or each neuron included by the second intermediate layer is one of the M neurons included by the first intermediate layer.

Optionally, the sending module is further configured to:
send a preset association relationship to the terminal device, where the preset association relationship indicates a correspondence between an available resource state and a third width size of a third neural network model or a correspondence between an available resource state and a fourth width size of the third neural network model, the third neural network model is obtained based on the second neural network model, the third width size indicates a quantity of attention heads included by a transformer layer, and the fourth width size indicates a quantity of neurons included by an intermediate layer.

The preset association relationship is a preset function; and an input of the preset function is the available resource state, and an output of the preset function is the third width size of the third neural network model; or an input of the preset function is the available resource state, and an output of the preset function is the fourth width size of the third neural network model; or

the preset association relationship is a preset table; and the preset table includes a plurality of available resource states and a third width size that is of the third neural network model and that corresponds to each available resource state; or the preset table includes a plurality of available resource states and a fourth width size that is of the third neural network model and that corresponds to each available resource state.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the second neural network model is a part of the first neural network model.

Optionally, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head.

Optionally, a sum of absolute values of element values in a plurality of transformation matrices included by the first attention head is greater than a sum of absolute values of element values in a plurality of transformation matrices included by the second attention head.

Optionally, the M attention heads included by the first transformer layer are arranged in the following manner: arranging the M attention heads based on capabilities of affecting the output result of the first neural network model by the M attention heads.

Optionally, a capability of affecting the output result of the first neural network model by each attention head included by the second transformer layer is greater than the capability of affecting the output result of the first neural network model by the second attention head.

Optionally, the determining module is further configured to:
determine first width size information of the second neural network model based on the performance requirement information, where the first width size information includes the quantity of attention heads included by the second transformer layer.

Optionally, the determining module is specifically configured to:
determine the first width size information of the second neural network model based on a first preset association relationship and the performance requirement information, where the first preset association relationship indicates a correspondence between the performance requirement information and the first width size information of the second neural network model.

The first preset association relationship is a preset function, an input of the preset function is the performance requirement information, and an output of the preset function is the first width size information of the second neural network model; or
the first preset association relationship is a preset table, and the preset table includes a plurality of pieces of performance requirement information and first width size information that is of the second neural network model and that corresponds to each piece of performance requirement information.

Optionally, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

Optionally, each neuron included by the second intermediate layer is one of the M neurons included by the first intermediate layer.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the first transformer layer further includes a first multi-head attention MHA layer, and the second transformer layer further includes a second MHA layer. A ratio of a quantity of attention heads included by the second MHA layer to a quantity of attention heads included by the first MHA layer is a first ratio, a ratio of the quantity of neurons included by the second intermediate layer to a quantity of neurons included by the first intermediate layer is a second ratio, and the first ratio is equal to the second ratio.

Optionally, the second neural network model is a part of the first neural network model.

Optionally, the second intermediate layer includes a first neuron, the M neurons include the first neuron and a second neuron, the second intermediate layer does not include the second neuron, and a capability of affecting an output result of the first neural network model by the first neuron is greater than a capability of affecting the output result of the first neural network model by the second neuron.

Optionally, the M neurons included by the first intermediate layer are arranged in the following manner:
arranging the M neurons based on capabilities of affecting the output result of the first neural network model by the M neurons.

Optionally, a capability of affecting the output result of the first neural network model by each neuron included by the second intermediate layer is greater than the capability of affecting the output result of the first neural network model by the second neuron.

Optionally, the determining module is further configured to:
determine second width size information of the second neural network model based on the performance requirement information, where the second width size information includes the quantity of neurons included by the second intermediate layer.

Optionally, the determining module is specifically configured to:
determine the second width size information of the second neural network model based on a second preset association relationship and the performance requirement information, where the second preset association relationship indicates a correspondence between the performance requirement information and the second width size information of the second neural network model.

The first preset association relationship is a preset function, an input of the preset function is the performance requirement information, and an output of the preset function is the second width size information of the second neural network model; or
the first preset association relationship is a preset table, and the preset table includes a plurality of pieces of performance requirement information and second width size information that is of the second neural network model and that corresponds to each piece of performance requirement information.

Optionally, the performance requirement information includes at least one of the following:
a precision requirement, a latency requirement, or a model compression ratio requirement.

Optionally, the first neural network model further includes a third transformer layer, the second neural network model includes a fourth transformer layer corresponding to the third transformer layer, the fourth transformer layer includes a third intermediate layer, and a quantity of neurons included by the third intermediate layer is the same as the quantity of neurons included by the second intermediate layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

The embodiment of this application provides a data processing device, including: the receiving module 1901, configured to receive the performance requirement information sent by the terminal device; the obtaining module 1902, configured to obtain the first neural network model, where the first neural network model includes the first transformer layer, the first neural network model includes the first transformer layer, the first transformer layer includes the M attention heads and the first feed-forward layer, the first feed-forward layer includes the first intermediate layer (intermediate layer), the first intermediate layer includes the N neurons, and M and N are positive integers; the determining module 1903, configured to determine the second neural network model based on the performance requirement information, where the second neural network model is obtained based on the first neural network model, and the second neural network model meets at least one of the following conditions: the second neural network model includes the second transformer layer corresponding to the first transformer layer, and the quantity of attention heads included by the second transformer layer is less than M; or the second neural network model includes the second intermediate layer corresponding to the first intermediate layer, and the quantity of neurons included by the second intermediate layer is less than N; and the sending module, configured to send the second neural network model to the terminal device. In the foregoing manner, a cloud-side device may determine, based on the performance requirement information of the terminal device, a second neural network model suitable for a requirement of the terminal device.

FIG. 20 is a schematic diagram of a structure of a data processing device 2000 according to an embodiment of this application. The data processing device 2000 may be a server. The data processing device 2000 includes:

an obtaining module 2001, configured to obtain a first neural network model, where the first neural network model includes a first transformer layer, the first transformer layer includes M attention heads, and M is a positive integer;

a receiving module 2002, configured to receive performance requirement information sent by a terminal device;

a determining module 2003, configured to determine a second neural network model based on the performance requirement information, where the second neural network model includes a second transformer layer corresponding to the first transformer layer, a quantity of attention heads included by the second transformer layer is less than M, the first neural network model is obtained by performing knowledge distillation training on an initial neural network model based on at least one width size, where each of the at least one width size indicates a quantity of attention heads included by a transformer layer, and the quantity of attention heads included by the second transformer layer is one of the at least one width size; and

a sending module 2004, configured to send the second neural network model to the terminal device.

Optionally, the performance requirement information includes at least one of the following:

a precision requirement, a latency requirement, or a model compression ratio requirement.

Optionally, the first transformer layer further includes a first skip connection layer and a first normalization layer, and the second transformer layer further includes a second skip connection layer and a second normalization layer. The first skip connection layer is the same as the second skip connection layer, and the first normalization layer is the same as the second normalization layer.

Optionally, the second neural network model is a part of the first neural network model.

Optionally, the first transformer layer further includes the first feed-forward layer, and the second transformer layer further includes a second feed-forward layer. The first feed-forward layer includes the first intermediate layer (intermediate layer), and the second feed-forward layer includes the second intermediate layer. A ratio of the quantity of neurons included by the second intermediate layer to a quantity of neurons included by the first intermediate layer is a first ratio, a ratio of the quantity of attention heads included by the second transformer layer to a quantity of attention heads included by the first transformer layer is a second ratio, and the first ratio is equal to the second ratio.

Optionally, the second transformer layer includes a first attention head, the M attention heads include the first attention head and a second attention head, the second transformer layer does not include the second attention head, and a capability of affecting an output result of the first neural network model by the first attention head is greater than a capability of affecting the output result of the first neural network model by the second attention head.

Optionally, a sum of absolute values of element values in a plurality of transformation matrices included by the first attention head is greater than a sum of absolute values of element values in a plurality of transformation matrices included by the second attention head.

Optionally, the M attention heads included by the first transformer layer are arranged in the following manner: arranging the M attention heads based on capabilities of affecting the output result of the first neural network model by the M attention heads.

Optionally, a capability of affecting the output result of the first neural network model by each attention head included by the second transformer layer is greater than the capability of affecting the output result of the first neural network model by the second attention head.

Optionally, the determining module is further configured to:

determine first width size information of the second neural network model based on the performance requirement information, where the first width size information includes the quantity of attention heads included by the second transformer layer.

Optionally, the determining module is specifically configured to:

determine the first width size information of the second neural network model based on a first preset association relationship and the performance requirement information, where the first preset association relationship indicates a correspondence between the performance requirement information and the first width size information of the second neural network model.

The first preset association relationship is a preset function, an input of the preset function is the performance requirement information, and an output of the preset function is the first width size information of the second neural network model; or

the first preset association relationship is a preset table, and the preset table includes a plurality of pieces of performance requirement information and first width size information that is of the second neural network model and that corresponds to each piece of performance requirement information.

Optionally, the first neural network model further includes a third transformer layer, the second neural network model includes a fourth transformer layer corresponding to the third transformer layer, and a quantity of attention heads included by the fourth transformer layer is the same as the quantity of attention heads included by the second transformer layer.

Optionally, the first neural network model further includes a first embedding layer; the first transformer layer is connected to the first embedding layer, and is configured to obtain an embedding vector from the first embedding layer as an input vector; and the second neural network model further includes a second embedding layer, and the second transformer layer obtains an embedding vector from the second embedding layer as an input vector.

Optionally, the first neural network model further includes a fifth transformer layer and a sixth transformer layer; and the first transformer layer is connected to the fifth transformer layer and the sixth transformer layer, and is configured to obtain an output vector obtained from the fifth transformer layer as an input vector and use an output vector as an input vector of the sixth transformer layer.

The second neural network model further includes a seventh transformer layer and an eighth transformer layer. The seventh transformer layer corresponds to the fifth transformer layer, and the eighth transformer layer corresponds to the sixth transformer layer. The second transformer layer is connected to the seventh transformer layer and the eighth transformer layer, and is configured to obtain an output vector obtained from the seventh transformer layer as an input vector and use an output vector as an input vector of the eighth transformer layer.

The embodiment of this application provides a data processing device, including: the obtaining module 2001, configured to obtain the first neural network model, where the first neural network model includes the first transformer layer, the first transformer layer includes the M attention heads, and M is a positive integer; the receiving module 2002, configured to receive the performance requirement information sent by the terminal device; the determining module 2003, configured to determine the second neural network model based on the performance requirement information, where the second neural network model includes the second transformer layer corresponding to the first transformer layer, the quantity of attention heads included by the second transformer layer is less than M, the first neural network model is obtained by performing knowledge distillation training on the initial neural network model based on the at least one width size, where each of the at least one width size indicates the quantity of attention heads included by the transformer layer, and the quantity of attention heads included by the second transformer layer is one of the at least one width size; and the sending module 2004, configured to send the second neural network model to the terminal device. In the foregoing manner, a cloud-side device may determine, based on the performance requirement information of the terminal device, a second neural network model suitable for a requirement of the terminal device.

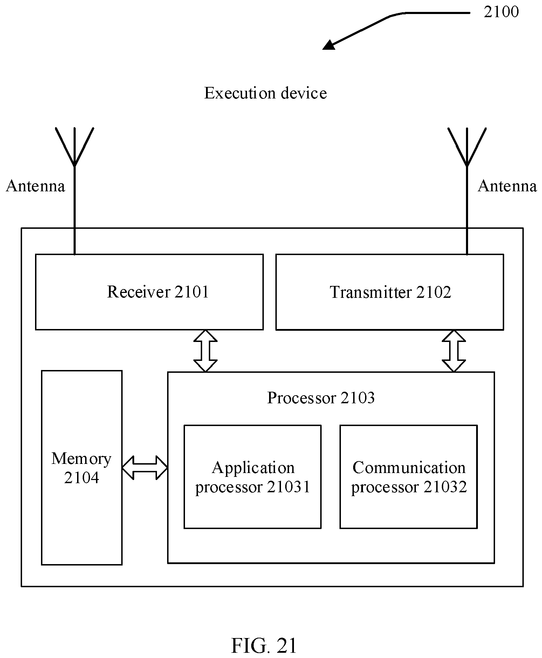

The following describes an execution device according to an embodiment of this application. FIG. 21 is a schematic diagram of a structure of an execution device according to an embodiment of this application. An execution device 2100 may be specifically presented as a virtual reality VR device, a mobile phone, a tablet computer, a notebook computer, an intelligent wearable device, a monitoring data processing device, a server, or the like. This is not limited herein. Specifically, the execution device 2100 includes a receiver 2101, a transmitter 2102, a processor 2103, and a memory 2104 (there may be one or more processors 2103 in the execution device 2100, and one processor is used as an example in FIG. 21). The processor 2103 may include an application processor 21031 and a communication processor 21032. In some embodiments of this application, the receiver 2101, the transmitter 2102, the processor 2103, and the memory 2104 may be connected through a bus or in another manner.

The memory 2104 may include a read-only memory and a random access memory, and provide instructions and data to the processor 2103. A part of the memory 2104 may further include a non-volatile random access memory (non-volatile random access memory, NVRAM). The memory 2104 stores a processor and operation instructions, an executable module or a data structure, or a subset thereof, or an extended set thereof. The operation instructions may include various operation instructions used to implement various operations.

The processor 2103 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in embodiments of this application may be applied to the processor 2103, or may be implemented by the processor 2103. The processor 2103 may be an integrated circuit chip, and has a signal processing capability. In an implementation process, steps in the foregoing methods can be implemented by using a hardware integrated logical circuit in the processor 2103, or by using instructions in a form of software. The processor 2103 may be a general-purpose processor, a digital signal processor (digital signal processor, DSP), a microprocessor, or a microcontroller. The processor 2103 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 2103 may implement or perform the methods, the steps, and the logical block diagrams disclosed in embodiments of this application. The general-purpose processor may be a microprocessor, or any conventional processor, or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 2104, and the processor 2103 reads information in the memory 2104 and completes the steps of the foregoing methods in combination with hardware of the processor.

The receiver 2101 may be configured to receive input digit or character information, and generate a signal input related to a related setting and function control of the execution device. The transmitter 2102 may be configured to output digital or character information through a first interface. The transmitter 2102 may be further configured to send instructions to a disk group through the first interface, to modify data in the disk group. The transmitter 2102 may further include a display device such as a display screen.

In this embodiment of this application, in one case, the processor 2103 is configured to perform the data processing methods performed by the devices in embodiments corresponding to FIG. 6, FIG. 11, FIG. 13, and FIG. 14.

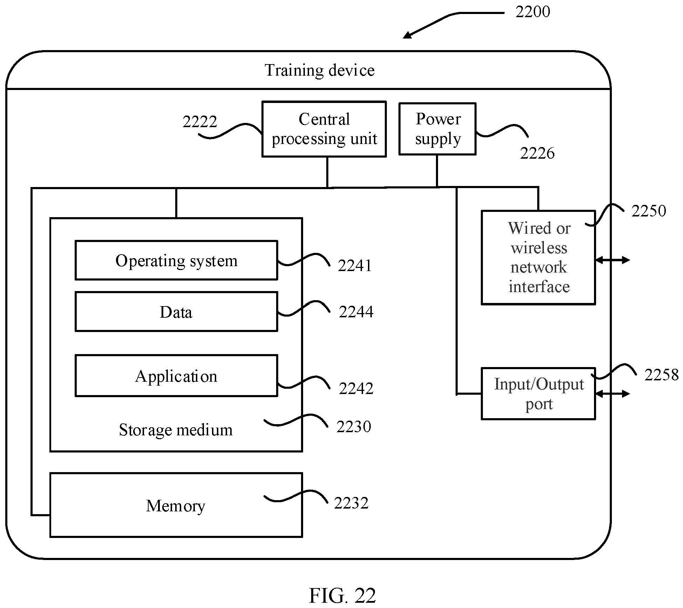

An embodiment of this application further provides a training device. FIG. 22 is a schematic diagram of a structure of a training device according to an embodiment of this application. The image processing device described in the embodiment corresponding to FIG. 17 may be deployed on a training device 2200, to implement a function of the data processing device in the embodiment corresponding to FIG. 18. Specifically, the training device 2200 is implemented by one or more servers, and the training device 2200 may differ greatly due to different configurations or performance. The training device may include one or more central processing units (central processing units, CPU) 2222 (for example, one or more processors), a memory 2232, and one or more storage media 2230 (for example, one or more mass storage devices) for storing an application 2242 or data 2244. The memory 2232 and the storage medium 2230 may perform temporary storage or permanent storage. A program stored in the storage medium 2230 may include at least one module (not shown in the figure), and each module may include a series of instruction operations for the training device. Still further, the central processing unit 2222 may be configured to communicate with the storage medium 2230, to perform, on the training device 2200, a series of instruction operations in the storage medium 2230.

The training device 2200 may further include one or more power supplies 2226, one or more wired or wireless network interfaces 2250, one or more input/output interfaces 2258, and/or one or more operating systems 2241, for example, Windows ServerTM, Mac OS XTM, UnixTM, LinuxTM, and FreeBSDTM.

In this embodiment of this application, the central processing unit 2222 is configured to perform the data processing method performed by the data processing apparatus in the embodiment corresponding to FIG. 18.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing methods described in the foregoing embodiments, or a chip in the training device performs the data processing methods described in the foregoing embodiments. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

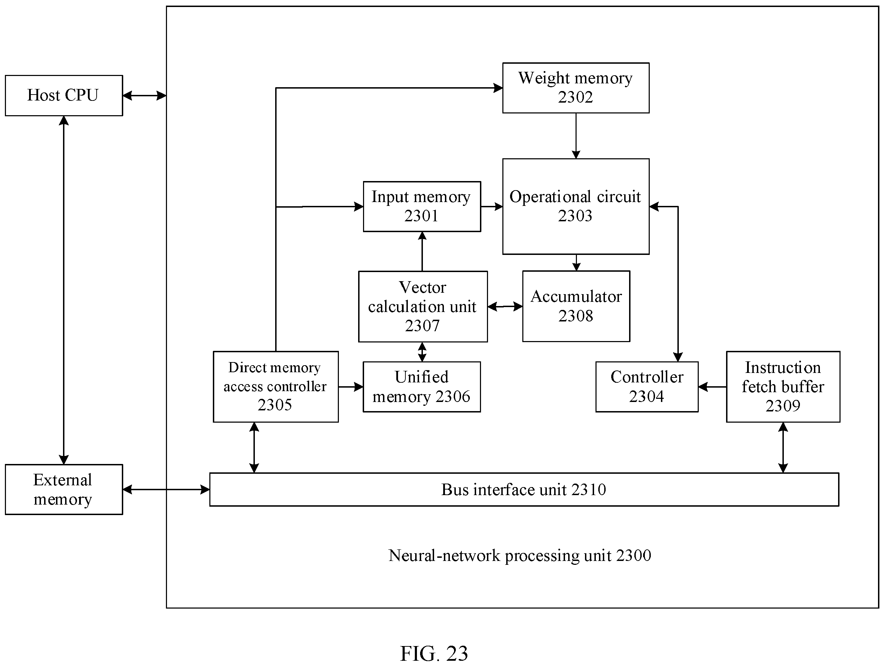

Specifically, FIG. 23 is a schematic diagram of a structure of a chip according to an embodiment of this application. The chip may be represented as a neural-network processing unit NPU 2300. The NPU 2300 is mounted to a host CPU (Host CPU) as a coprocessor, and the host CPU allocates a task. A core part of the NPU is an operational circuit 2303. The operational circuit 2303 is controlled by a controller 2304 to extract matrix data in a memory and perform a multiplication operation.

In some implementations, a plurality of processing engine (Process Engine, PE) are included in the operational circuit 2303. In some implementations, the operational circuit 2303 is a two-dimensional systolic array. The operational circuit 2303 may alternatively be a one-dimensional systolic array or another electronic circuit that can perform mathematical operations such as multiplication and addition. In some implementations, the operational circuit 2303 is a general-purpose matrix processor.

For example, it is assumed that there are an input matrix A, a weight matrix B, and an output matrix C. The operational circuit fetches corresponding data of the matrix B from a weight memory 2302 and buffers the data on each PE in the operational circuit. The operational circuit stores, into an accumulator (accumulator) 2308, some matrix results or final matrix results obtained by performing matrix operation on data of the matrix A fetched from an input memory 2301 and the matrix B.

A unified memory 2306 is configured to store input data and output data. Weight data is directly transferred to the weight memory 2302 by using a storage unit access controller (Direct Memory Access Controller, DMAC) 2305. The input data is also transferred to the unified memory 2306 by using the DMAC.

BIU is the abbreviation for bus interface unit. A bus interface unit 2310 is configured to perform interaction between an AXI bus, and the DMAC and an instruction fetch buffer (Instruction Fetch Buffer, IFB) 2309.

The bus interface unit 2310 (Bus Interface Unit, BIU for short) is configured for the instruction fetch buffer 2309 to obtain an instruction from an external memory, and is further configured for the storage unit access controller 2305 to obtain raw data of the input matrix A or the weight matrix B from the external memory.

The DMAC is mainly configured to: transfer input data in an external memory DDR to the unified memory 2306, transfer the weight data to the weight memory 2302, or transfer the input data to the input memory 2301.

A vector calculation unit 2307 includes a plurality of operation processing units. When necessary, further processing is performed on an output of the operational circuit, such as vector multiplication, vector addition, an exponential operation, a logarithmic operation, or value comparison. The vector calculation unit 2307 is mainly configured to perform network computing, such as batch normalization (batch normalization), pixel-level summation, and upsampling of a feature plane, on a non-convolutional/fully-connected layer in a neural network.

In some implementations, the vector calculation unit 2307 can store, into the unified cache 2306, a processed output vector. For example, the vector calculation unit 2307 may apply a linear function or a non-linear function to the output of the operational circuit 2303, for example, perform linear interpolation on a feature plane extracted at a convolutional layer. For another example, a linear function or a non-linear function is applied to a vector of an accumulated value to generate an activation value. In some implementations, the vector calculation unit 2307 generates a normalized value, a pixel-level sum, or a normalized value and a pixel-level sum. In some implementations, the processed output vector can be used as an activation input of the operational circuit 2303, for example, can be used at a subsequent layer in the neural network.

The instruction fetch buffer (instruction fetch buffer) 2309 connected to the controller 2304 is configured to store an instruction used by the controller 2304.

The unified memory 2306, the input memory 2301, the weight memory 2302, and the instruction fetch buffer 2309 are all on-chip memories. The external memory is private for an NPU hardware architecture.

The processor mentioned anywhere above may be a general-purpose central processing unit, a microprocessor, an ASIC, or one or more integrated circuits configured to control program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any function that can be performed by a computer program can be easily implemented by using corresponding hardware. In addition, a specific hardware structure used to achieve a same function may be of various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, a procedure or function according to embodiments of this application is all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

**Claims**

1. A data processing method, wherein the method comprises:

   obtaining a first neural network model and an available resource state of a terminal device, wherein the first neural network model comprises at least one transformer (transformer) layer, the at least one transformer layer comprises a first transformer layer, the first transformer layer comprises M attention heads and a first feed-forward layer, the first feed-forward layer comprises a first intermediate layer (intermediate layer), the first intermediate layer comprises N neurons, and M and N are positive integers; and
   determining a second neural network model based on the available resource state, wherein the second neural network model is obtained based on the first neural network model, and the second neural network model meets at least one of the following conditions:

   the second neural network model comprises a second transformer layer corresponding to the first transformer layer, and a quantity of attention heads comprised by the second transformer layer is less than M;
   the second neural network model comprises a second intermediate layer corresponding to the first intermediate layer, and a quantity of neurons comprised by the second intermediate layer is less than N; or
   a quantity of transformer layers comprised by the second neural network model is less than a quantity of transformer layers comprised by the first neural network model.

2. The method according to claim 1, wherein the first neural network model is obtained by performing knowledge distillation training on an initial neural network model based on at least one first width size, wherein each of the at least one first width size indicates a quantity of attention heads comprised by a transformer layer, and the quantity of attention heads comprised by the second transformer layer is one of the at least one first width size; or

   the first neural network model is obtained by performing knowledge distillation training on an initial neural network model based on at least one second width size, wherein each of the at least one second width size indicates a quantity of neurons comprised by an intermediate layer, and the quantity of neurons comprised by the second transformer layer is one of the at least one second width size; or
   the first neural network model is obtained by performing knowledge distillation training on an initial neural network model based on at least one depth size, wherein each of the at least one depth size indicates a quantity of transformer layers, and a quantity of second transformer layers is one of the at least one depth size.

3. The method according to claim 1 or 2, wherein each attention head comprised by the second transformer layer is one of the M attention heads comprised by the first transformer layer; or
   each neuron comprised by the second intermediate layer is one of the M neurons comprised by the first intermediate layer.

4. The method according to any one of claims 1 to 3, wherein a ratio of the quantity of neurons comprised by the second intermediate layer to a quantity of neurons comprised by the first intermediate layer is a first ratio, a ratio of the quantity of attention heads comprised by the second transformer layer to a quantity of attention heads comprised by the first transformer layer is a second ratio, and the first ratio is equal to the second ratio.

5. The method according to any one of claims 1 to 4, wherein the second transformer layer comprises a first attention head, the M attention heads comprise the first attention head and a second attention head, the second transformer layer does not comprise the second attention head, and a capability of affecting an output result of the first neural network model by the first attention head is greater than a capability of affecting the output result of the first neural network model by the second attention head; or
   the second intermediate layer comprises a first neuron, the M neurons comprise the first neuron and a second neuron, the second intermediate layer does not comprise the second neuron, and a capability of affecting an output result of the first neural network model by the first neuron is greater than a capability of affecting the output result of the first neural network model by the second neuron.

**6.** The method according to any one of claims 1 to 5, wherein the method further comprises:
determining first width size information, second width size information, or depth size information of the second neural network model based on the available resource state, wherein the first width size information comprises the quantity of attention heads comprised by the second transformer layer, the second width size information comprises the quantity of neurons comprised by the second intermediate layer, and the depth size information comprises the quantity of transformer layers comprised by the second neural network model.

**7.** The method according to claim 6, wherein the determining size information or second width size information of the second neural network model based on the available resource state comprises:

determining the first width size information, the second width size information, or the depth size information of the second neural network model based on a preset association relationship and the available resource state, wherein the preset association relationship indicates a correspondence between the available resource state and the first width size information of the second neural network model, a correspondence between the available resource state and the second width size information of the second neural network model, or a correspondence between the available resource state and the depth size information of the second neural network model; and the preset association relationship is a preset function; and an input of the preset function is the available resource state, and an output of the preset function is the first width size information of the second neural network model; or an input of the preset function is the available resource state, and an output of the preset function is the second width size information of the second neural network model; or an input of the preset function is the available resource state, and an output of the preset function is the depth size information of the second neural network model; or
the preset association relationship is a preset table; and the preset table comprises a plurality of available resource states and first width size information that is of the second neural network model and that corresponds to each available resource state; or the preset table comprises a plurality of available resource states and second width size information that is of the second neural network model and that corresponds to each available resource state; or the preset table comprises a plurality of available resource states and depth size information that is of the second neural network model and that corresponds to each available resource state.

**8.** The method according to any one of claims 1 to 7, wherein the available resource state comprises at least one of the following:
power consumption of the terminal device, a computing capability of the terminal device, or an available storage size of the terminal device.

**9.** The method according to any one of claims 1 to 8, wherein the method further comprises:

obtaining to-be-processed language information; and
processing the to-be-processed language information based on the second neural network model.

**10.** A data processing method, comprising:

receiving performance requirement information sent by a terminal device;
obtaining a first neural network model, wherein the first neural network model comprises at least one transformer (transformer) layer, the at least one transformer layer comprises a first transformer layer, the first transformer layer comprises M attention heads and a first feed-forward layer, the first feed-forward layer comprises a first intermediate layer (intermediate layer), the first intermediate layer comprises N neurons, and M and N are positive integers;
determining a second neural network model based on the performance requirement information, wherein the second neural network model is obtained based on the first neural network model, and the second neural network model meets at least one of the following conditions:

the second neural network model comprises a second transformer layer corresponding to the first transformer layer, and a quantity of attention heads comprised by the second transformer layer is less than M;
the second neural network model comprises a second intermediate layer corresponding to the first intermediate layer, and a quantity of neurons comprised by the second intermediate layer is less than N; or
a quantity of transformer layers comprised by the second neural network model is less than a quantity of transformer layers comprised by the first neural network model; and
sending the second neural network model to the terminal device.

**11.** The method according to claim 10, wherein the performance requirement information comprises at least one of the following:
a precision requirement, a latency requirement, or a model compression ratio requirement.

**12.** The method according to claim 10 or 11, wherein the first neural network model is obtained by performing knowledge distillation training on an initial neural network model based on at least one first width size, wherein each of the at least one first width size indicates a quantity of attention heads comprised by a transformer layer, and the quantity of attention heads comprised by the second transformer layer is one of the at least one first width size; or

the first neural network model is obtained by performing knowledge distillation training on an initial neural network model based on at least one second width size, wherein each of the at least one second width size indicates a quantity of neurons comprised by an intermediate layer, and the quantity of neurons comprised by the second transformer layer is one of the at least one second width size; or
the first neural network model is obtained by performing knowledge distillation training on an initial neural network model based on at least one depth size, wherein each of the at least one depth size indicates a quantity of transformer layers, and the quantity of second transformer layers is one of the at least one depth size.

**13.** The method according to any one of claims 10 to 12, wherein each attention head comprised by the second transformer layer is one of the M attention heads comprised by the first transformer layer; or
each neuron comprised by the second intermediate layer is one of the M neurons comprised by the first intermediate layer.

**14.** The method according to any one of claims 10 to 13, wherein the method further comprises:

sending a preset association relationship to the terminal device, wherein the preset association relationship indicates a correspondence between an available resource state and a third width size of a third neural network model, a correspondence between an available resource state and a fourth width size of the third neural network model, or a correspondence between an available resource state and a depth size of the third neural network model, wherein the third neural network model is obtained based on the second neural network model, the third width size indicates a quantity of attention heads comprised by a transformer layer, the fourth width size indicates a quantity of neurons comprised by an intermediate layer, and the depth size indicates a quantity of transformer layers comprised by the second neural network model; and
the preset association relationship is a preset function; and an input of the preset function is the available resource state, and an output of the preset function is the third width size of the third neural network model; or an input of the preset function is the available resource state, and an output of the preset function is the fourth width size of the third neural network model; or an input of the preset function is the available resource state, and an output of the preset function is the depth size of the third neural network model; or
the preset association relationship is a preset table; and the preset table comprises a plurality of available resource states and a third width size that is of the third neural network model and that corresponds to each available resource state; or the preset table comprises a plurality of available resource states and a fourth width size that is of the third neural network model and that corresponds to each available resource state; or the preset table comprises a plurality of available resource states and a depth size that is of the third neural network model and that corresponds to each available resource state.

**15.** A data processing device, wherein the device comprises:

an obtaining module, configured to obtain a first neural network model and an available resource state of a terminal device, wherein the first neural network model comprises at least one transformer (transformer) layer, the at least one transformer layer comprises a first transformer layer, the first transformer layer comprises M attention heads and a first feed-forward layer, the first feed-forward layer comprises a first intermediate layer (intermediate layer), the first intermediate layer comprises N neurons, and M and N are positive integers; and
a determining module, configured to determine a second neural network model based on the available resource state, wherein the second neural network model is obtained based on the first neural network model, and the second neural network model meets at least one of the following conditions:

the second neural network model comprises a second transformer layer corresponding to the first transformer layer, and a quantity of attention heads comprised by the second transformer layer is less than M;
the second neural network model comprises a second intermediate layer corresponding to the first intermediate layer, and a quantity of neurons comprised by the second intermediate layer is less than N; or a quantity of transformer layers comprised by the second neural network model is less than a quantity of transformer layers comprised by the first neural network model.

16. The device according to claim 15, wherein the first neural network model is obtained by performing knowledge distillation training on an initial neural network model based on at least one first width size, wherein each of the at least one first width size indicates a quantity of attention heads comprised by a transformer layer, and the quantity of attention heads comprised by the second transformer layer is one of the at least one first width size; or

the first neural network model is obtained by performing knowledge distillation training on an initial neural network model based on at least one second width size, wherein each of the at least one second width size indicates a quantity of neurons comprised by an intermediate layer, and the quantity of neurons comprised by the second transformer layer is one of the at least one second width size; or

the first neural network model is obtained by performing knowledge distillation training on an initial neural network model based on at least one depth size, wherein each of the at least one depth size indicates a quantity of transformer layers, and a quantity of second transformer layers is one of the at least one depth size.

17. The device according to claim 15 or 16, wherein each attention head comprised by the second transformer layer is one of the M attention heads comprised by the first transformer layer; or

each neuron comprised by the second intermediate layer is one of the M neurons comprised by the first intermediate layer.

18. The device according to any one of claims 15 to 17, wherein a ratio of the quantity of neurons comprised by the second intermediate layer to a quantity of neurons comprised by the first intermediate layer is a first ratio, a ratio of the quantity of attention heads comprised by the second transformer layer to a quantity of attention heads comprised by the first transformer layer is a second ratio, and the first ratio is equal to the second ratio.

19. The device according to any one of claims 15 to 18, wherein the second transformer layer comprises a first attention head, the M attention heads comprise the first attention head and a second attention head, the second transformer layer does not comprise the second attention head, and a capability of affecting an output result of the first neural network model by the first attention head is greater than a capability of affecting the output result of the first neural network model by the second attention head; or

the second intermediate layer comprises a first neuron, the M neurons comprise the first neuron and a second neuron, the second intermediate layer does not comprise the second neuron, and a capability of affecting an output result of the first neural network model by the first neuron is greater than a capability of affecting the output result of the first neural network model by the second neuron.

20. The device according to any one of claims 15 to 19, wherein the determining module is further configured to:
determine first width size information, second width size information, or depth size information of the second neural network model based on the available resource state, wherein the first width size information comprises the quantity of attention heads comprised by the second transformer layer, the second width size information comprises the quantity of neurons comprised by the second intermediate layer, and the depth size information comprises the quantity of transformer layers comprised by the second neural network model.

21. The device according to claim 20, wherein the determining module is specifically configured to:

determine the first width size information, the second width size information, or the depth size information of the second neural network model based on a preset association relationship and the available resource state, wherein the preset association relationship indicates a correspondence between the available resource state and the first width size information of the second neural network model, a correspondence between the available resource state and the second width size information of the second neural network model, or a correspondence between the available resource state and the depth size information of the second neural network model; and the preset association relationship is a preset function; and an input of the preset function is the available resource state, and an output of the preset function is the first width size information of the second neural network model; or an input of the preset function is the available resource state, and an output of the preset function is the second width size information of the second neural network model; or an input of the preset function is the available resource state, and an output of the preset function is the depth size information of the second neural network model; or

the preset association relationship is a preset table; and the preset table comprises a plurality of available resource states and first width size information that is of the second neural network model and that corresponds to each available resource state; or the preset table comprises a plurality of available resource states and second width size information that is of the second neural network model and that corresponds to each available resource state; or the preset table comprises a plurality of available resource states and depth size information that is of the second neural network model and that corresponds to each available resource state.

22. The device according to any one of claims 15 to 21, wherein the available resource state comprises at least one of the following:
power consumption of the terminal device, a computing capability of the terminal device, or an available storage size of the terminal device.

23. The device according to any one of claims 15 to 22, wherein the obtaining module is further configured to:

obtain to-be-processed language information; and
the device further comprises a processing module, configured to process the to-be-processed language information based on the second neural network model.

24. A data processing device, wherein the device comprises:

a receiving module, configured to receive performance requirement information sent by a terminal device;
an obtaining module, configured to obtain a first neural network model, wherein the first neural network model comprises at least one transformer (transformer) layer, the at least one transformer layer comprises a first transformer layer, the first transformer layer comprises M attention heads and a first feed-forward layer, the first feed-forward layer comprises a first intermediate layer (intermediate layer), the first intermediate layer comprises N neurons, and M and N are positive integers;
a determining module, configured to determine a second neural network model based on the performance requirement information, wherein the second neural network model is obtained based on the first neural network model, and the second neural network model meets at least one of the following conditions:

the second neural network model comprises a second transformer layer corresponding to the first transformer layer, and a quantity of attention heads comprised by the second transformer layer is less than M;
the second neural network model comprises a second intermediate layer corresponding to the first intermediate layer, and a quantity of neurons comprised by the second intermediate layer is less than N; or
a quantity of transformer layers comprised by the second neural network model is less than a quantity of transformer layers comprised by the first neural network model; and
a sending module, configured to send the second neural network model to the terminal device.

25. The device according to claim 24, wherein the performance requirement information comprises at least one of the following:
a precision requirement, a latency requirement, or a model compression ratio requirement.

26. The device according to claim 24 or 25, wherein the first neural network model is obtained by performing knowledge distillation training on an initial neural network model based on at least one first width size, wherein each of the at least one first width size indicates a quantity of attention heads comprised by a transformer layer, and the quantity of attention heads comprised by the second transformer layer is one of the at least one first width size; or

the first neural network model is obtained by performing knowledge distillation training on an initial neural network model based on at least one second width size, wherein each of the at least one second width size indicates a quantity of neurons comprised by an intermediate layer, and the quantity of neurons comprised by the second transformer layer is one of the at least one second width size; or
the first neural network model is obtained by performing knowledge distillation training on an initial neural network model based on at least one depth size, wherein each of the at least one depth size indicates a quantity of transformer layers, and a quantity of second transformer layers is one of the at least one depth size.

27. The device according to any one of claims 24 to 26, wherein each attention head comprised by the second transformer layer is one of the M attention heads comprised by the first transformer layer; or
each neuron comprised by the second intermediate layer is one of the M neurons comprised by the first intermediate layer.

**28.** The device according to any one of claims 24 to 27, wherein the sending module is further configured to:

send a preset association relationship to the terminal device, wherein the preset association relationship indicates a correspondence between an available resource state and a third width size of a third neural network model, a correspondence between an available resource state and a fourth width size of the third neural network model, or a correspondence between an available resource state and a depth size of the third neural network model, wherein the third neural network model is obtained based on the second neural network model, the third width size indicates a quantity of attention heads comprised by a transformer layer, the fourth width size indicates a quantity of neurons comprised by an intermediate layer, and the depth size indicates a quantity of transformer layers comprised by the second neural network model; and

the preset association relationship is a preset function; and an input of the preset function is the available resource state, and an output of the preset function is the third width size of the third neural network model; or an input of the preset function is the available resource state, and an output of the preset function is the fourth width size of the third neural network model; or an input of the preset function is the available resource state, and an output of the preset function is the depth size of the third neural network model; or

the preset association relationship is a preset table; and the preset table comprises a plurality of available resource states and a third width size that is of the third neural network model and that corresponds to each available resource state; or the preset table comprises a plurality of available resource states and a fourth width size that is of the third neural network model and that corresponds to each available resource state; or the preset table comprises a plurality of available resource states and a depth size that is of the third neural network model and that corresponds to each available resource state.

Intelligent information chain

Intelligent product and industry application

| Translation/ Text analysis/... | Voice/Vision/ Image/... |

| Data | Data processing: | Data training/Machine learning/Deep learning | Searching/ Inference/ Decision- making | ... |

| Infrastructure | Sensor | Intelligent chip | Basic platform | ... |

IT value chain

FIG. 1

Interaction interface

Voice/Query statement/Text...

Voice response/Response statement/Text...

...

Memory

Processor

Data training/Machine learning/Deep learning

Searching/ Inference/ Decision- making

...

Data processing device (server)

13:21

User

User equipment

FIG. 2

FIG. 3

300

Data storage
system 350

Execution device 310

...

Communication
network

Local device 301

Local device 302

For example

FIG. 4

FIG. 5

Obtain a first neural network model and an available resource state of a terminal device ⟋ 601

↓

Determine a second neural network model based on the available resource state ⟋ 602

FIG. 6

Neural network model

↑

Transformer layer

↑

...

Transformer layer

↑

Embedding layer

↑

FIG. 7

FIG. 8

FIG. 9

FIG. 10

118

Obtain a first neural network model and an available resource state of a terminal device ⟋ 1101

↓

Determine a second neural network model based on the available resource state ⟋ 1102

FIG. 11

First neural network model

↑

Transformer layer M

↑

...

↑

Transformer layer 1

⎫
⎬ M
⎭

↑

Embedding layer

↑

⟶

Second neural network model

↑

Transformer layer M/3

↑

...

↑

Transformer layer 1

⎫
⎬ M/3
⎭

↑

Embedding layer

↑

FIG. 12

Receive performance requirement information sent by a terminal device — 1301

Obtain a first neural network model — 1302

Determine a second neural network model based on the performance requirement information — 1303

Send the second neural network model to the terminal device — 1304

FIG. 13

Receive performance requirement information sent by a terminal device — 1401

Obtain a first neural network model — 1402

Determine a second neural network model based on the performance requirement information — 1403

Send the second neural network model to the terminal device — 1404

FIG. 14

| Obtain a first neural network model | 1501 |

↓

| Determine a first neural network submodel based on the first neural network model | 1502 |

↓

| Perform iterative training on the first neural network submodel by using the first neural network model as a teacher model and based on knowledge distillation, to update a parameter of the first neural network submodel, so as to obtain a second neural network model, where an updated first neural network submodel is a part of the second neural network model | 1503 |

FIG. 15

1600

1601 Obtaining module ——— 1602 Determining module

1603 Processing module

FIG. 16

1700

Obtaining module 1701

Determining module 1702

Processing module 1703

FIG. 17

1800

Obtaining module 1801

Determining module 1802

Training module 1803

FIG. 18

1900

Receiving module 1901

Obtaining module 1902

Determining module 1903

FIG. 19

2000

Obtaining module 2001

Receiving module 2002

Sending module 2004

Determining module 2003

FIG. 20

2100

Execution device

| Receiver 2101 | Transmitter 2102 |
|---|---|

Processor 2103

| Memory 2104 | Application processor 21031 | Communication processor 21032 |
|---|---|---|

FIG. 21

FIG. 22

FIG. 23

## INTERNATIONAL SEARCH REPORT

| | International application No. |
| --- | --- |
| | **PCT/CN2020/117760** |

**A. CLASSIFICATION OF SUBJECT MATTER**

G06N 3/08(2006.01)i; G06N 3/04(2006.01)i; G06N 3/10(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 终端, 设备, 神经网络, 个数, 大小, 尺寸, 数目, 数量, 宽度, 深度, 注意力头, 神经元, 转换层, 部分, 收缩, 简化, 缩减, 缩小, 功耗, 压缩比, 存储, 性能, 时延, 精度, 能力, 资源, device, terminal, neural network, neuron, transformer, head attention, part, number, size, depth, width, reduce, shrink, accuracy, compression ratio, performance, power consumption, time delay, resource

**C. DOCUMENTS CONSIDERED TO BE RELEVANT**

| Category* | Citation of document, with indication, where appropriate, of the relevant passages | Relevant to claim No. |
| --- | --- | --- |
| PX | CN 111368993 A (HUAWEI TECHNOLOGIES CO., LTD.) 03 July 2020 (2020-07-03) claims 1-28, description paragraphs [0006]-[0882] | 1-28 |
| X | CN 110717589 A (BEIJING KUANGSHI TECHNOLOGY CO., LTD.) 21 January 2020 (2020-01-21) description, paragraphs [0024]-[0098], and figures 1-9 | 1-28 |
| A | CN 110472736 A (LENOVO (BEIJING) LIMITED) 19 November 2019 (2019-11-19) entire document | 1-28 |
| A | CN 110622178 A (GOOGLE INC.) 27 December 2019 (2019-12-27) entire document | 1-28 |
| A | US 2018096246 A1 (OKI ELECTRIC IND CO., LTD.) 05 April 2018 (2018-04-05) entire document | 1-28 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 November 2020** | **30 December 2020** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/117760**

| Patent document cited in search report | | | Publication date (day/month/year) | Patent family member(s) | | | Publication date (day/month/year) |
|---|---|---|---|---|---|---|---|
| CN | 111368993 | A | 03 July 2020 | None | | | |
| CN | 110717589 | A | 21 January 2020 | None | | | |
| CN | 110472736 | A | 19 November 2019 | None | | | |
| CN | 110622178 | A | 27 December 2019 | EP | 3574454 | A1 | 04 December 2019 |
| | | | | US | 2019147339 | A1 | 16 May 2019 |
| | | | | WO | 2019099193 | A1 | 23 May 2019 |
| US | 2018096246 | A1 | 05 April 2018 | JP | 2018055514 | A | 05 April 2018 |
| | | | | JP | 6690489 | B2 | 28 April 2020 |

Form PCT/ISA/210 (patent family annex) (January 2015)

**EP 4 089 587 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010088948